(19)

**Europäisches Patentamt**
**European Patent Office**
**Office européen des brevets**

(11) **EP 4 712 624 A1**

(12) **EUROPEAN PATENT APPLICATION**
published in accordance with Art. 153(4) EPC

(43) Date of publication:
**18.03.2026 Bulletin 2026/12**

(21) Application number: **23936864.0**

(22) Date of filing: **12.05.2023**

(51) International Patent Classification (IPC):
*H04W 72/0446* *(2023.01)*

(52) Cooperative Patent Classification (CPC):
**H04W 72/0446**

(86) International application number:
**PCT/CN2023/094024**

(87) International publication number:
**WO 2024/234171 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **CAO, Jianfei
Dongguan, Guangdong 523860 (CN)**
• **FANG, Yun
Dongguan, Guangdong 523860 (CN)**

(74) Representative: **Penza, Giancarlo
Bugnion S.p.A.
Viale Lancetti, 17
20158 Milano (IT)**

(54) **WIRELESS COMMUNICATION METHOD AND DEVICE**

(57) Provided in the embodiments of the present application are wireless communication methods and a device. On the basis of m TA command fields in an RAR, a terminal device can determine TA values corresponding to m TAGs, so as to acquire the TA values in an intra-cell multi-TRP and inter-cell multi-TRP uplink transmission scenario, thereby optimizing uplink transmission in the multi-TRP scenario. A wireless communication method comprises: a terminal device sends a PRACH; and the terminal device receives an RAR, wherein the RAR comprises m TA command fields, the m TA command fields are respectively used for indicating TA values corresponding to m TAGs, m is a positive integer, and m=1 or m≥2.

FIG. 7

**Description**

TECHNICAL FIELD

Embodiments of the present disclosure relate to the technical field of communications, and more particularly, to wireless communication methods and devices.

BACKGROUND

In uplink transmission scenarios of intra-cell multiple Transmission Reception Points (TRPs) (multi-TRPs) and inter-cell multi-TRPs, how a terminal device acquires Timing Advance (TA) is a problem required to be solved.

SUMMARY

Embodiments of the present disclosure provide wireless communication methods and devices. A terminal device may determine TA values corresponding to m TAGs based on m TA command fields in a Random Access Response (RAR), thereby acquiring TA values in the uplink transmission scenarios of intra-cell multi-TRPs and inter-cell multi-TRPs, and optimizing the uplink transmission in the multi-TRPs scenario.
According to a first aspect, there is provided a method for wireless communication including following operations.
A terminal device sends a Physical Random Access Channel (PRACH); and
The terminal device receives an RAR, where the RAR includes m TA command fields, and the m TA command fields respectively indicate TA values corresponding to m Timing Advance Groups (TAGs), where m is a positive integer, and m = 1 or m ≥ 2.
According to a second aspect, there is provided a method for wireless communication including following operations.
A first network node sends an RAR, where the RAR includes m TA command fields, and the m TA command fields respectively indicate TA values corresponding to m TAGs, where m is a positive integer, and m = 1 or m ≥ 2.
According to a third aspect, there is provided a method for wireless communication including following operations.
A second network node sends a Physical Downlink Control Channel (PDCCH) order, where the PDCCH order is used to trigger a terminal device to send a PRACH.
Herein, the PDCCH order includes at least one of: a Channel State Information Reference Signal (CSI-RS) index, an Identity (ID) of an uplink Transmission Configuration Indicator (TCI) state, or an ID of a joint TCI state.
Herein, the CSI-RS index is associated with a Path Loss (PL) Reference Signal (RS) used to send the PRACH.
Herein, the uplink TCI state is associated with an uplink spatial filter for sending the PRACH, and/or a Downlink (DL) RS included in the uplink TCI state is associated with the PL RS used to send the PRACH.
Herein, the joint TCI state is associated with the uplink spatial filter for sending the PRACH, and/or a DL RS included in the joint TCI state is associated with the PL RS used to send the PRACH.
According to the technical schemes of the first aspect and the second aspect, the terminal device may determine the TA values corresponding to m TAGs based on m TA command fields in the RAR, thereby acquiring the TA values in the uplink transmission scenarios of intra-cell multi-TRPs and inter-cell multi-TRPs, and optimizing the uplink transmission in the multi-TRP scenario.
According to the technical scheme of the third aspect, the terminal device may determine the PL RS used to send the PRACH and/or the uplink spatial filter for sending the PRACH based on at least one of: the CSI-RS index, the ID of the TCI state, or the ID of the joint TCI state included in the PDCCH order, thereby optimizing the transmission of the PRACH.
The embodiments of the present disclosure solve the problem that the PDCCH order sent by the second network node conflicts with a QCL of the RAR sent by the first network node. Specifically, the terminal device uses an activated TCI state of a CORESET where the PDCCH order is located for receive beamforming to receive the PDCCH order, and uses the activated TCI state of the CORESET associated with a type 1 CSS associated with the RAR to receive a PDCCH and a Physical Downlink Shared Channel (PDSCH) that are associated with the RAR.
The embodiments of the present disclosure solve the problem that the PRACH sent by the terminal device to the second network node conflicts with the QCL of the RAR sent by the first network node. The terminal device sends the PRACH using the CSI-RS index or the ID of the downlink TCI state or the ID of the joint TCI state indicated in the PDCCH order, and uses the activated TCI state of the CORESET associated with the type 1 CSS associated with the RAR to receive the PDCCH and the PDSCH that are associated with the RAR.
The embodiments of the present disclosure solve the problem that the PRACH sent by the terminal device to the second network node conflicts with the QCL of the RAR sent by the first network node. The terminal device sends the PRACH using the CSI-RS index or the ID of the downlink TCI state or the ID of the joint TCI state indicated in the PDCCH order, and the terminal device receives the PDCCH order by using the activated TCI state of the CORESET where the PDCCH order is located for receive beamforming.

BRIEF DESCRIPTION OF THE DRAWINGS

FIG. 1 is a schematic diagram of an architecture of a communication system to which an embodiment of the present disclosure is applied.
FIG. 2 is a schematic diagram of a TA command according to the present disclosure.
FIG. 3 is a schematic diagram of another TA command according to the present disclosure.
FIG. 4 is a schematic diagram of yet another TA command according to the present disclosure.
FIG. 5 is a schematic diagram of an uplink and downlink frame structure from the perspective of User Equipment (UE) according to the present disclosure.
FIG. 6 is a schematic diagram of an uplink and downlink scheduling scenario of multiple Downlink Control Information (mDCI)-mTRPs according to the present disclosure.
FIG. 7 is a schematic flowchart of a method for wireless communication according to an embodiment of the present disclosure.
FIG. 8 to FIG. 18 are schematic diagrams of RARs according to embodiments of the present disclosure, respectively.
FIG. 19 to FIG. 22 are schematic diagrams of acquiring TAs according to embodiments of the present disclosure, respectively.
FIG. 23 is a schematic flowchart of another method for wireless communication according to an embodiment of the present disclosure.
FIG. 24 is a schematic block diagram of a terminal device according to an embodiment of the present disclosure.
FIG. 25 is a schematic block diagram of a network device according to an embodiment of the present disclosure.
FIG. 26 is a schematic block diagram of another network device according to an embodiment of the present disclosure.
FIG. 27 is a schematic block diagram of a communication device according to an embodiment of the present disclosure.
FIG. 28 is a schematic block diagram of an apparatus according to an embodiment of the present disclosure.
FIG. 29 is a schematic block diagram of a communication system according to an embodiment of the present disclosure.

DETAILED DESCRIPTION

The technical schemes of the embodiments of the present disclosure are described in conjunction with the accompanying drawings in the embodiments of the present disclosure. It is apparent that the described embodiments are only part of the embodiments of the present disclosure, not all the embodiments. All other embodiments obtained by those of ordinary skill in the art with respect to the embodiments of the present disclosure without creative efforts shall fall within the scope of protection of the present disclosure.

The technical schemes of the embodiments of the present disclosure may be applied to various communication systems, such as: a New Radio (NR) system, an evolution system for an NR system, an NR-based access to Unlicensed Spectrum (NR-U) system, a Non-Terrestrial Network (NTN) system, a Wireless Local Area Network (WLAN), an Internet of Things (IoT), a Wireless Fidelity (Wi-Fi), a 5th-Generation (5G) system, a 6th-Generation (6G) system, or other communication systems.

Generally speaking, traditional communication systems support a limited number of connections and are easy to be implemented. However, with the development of communication technology, mobile communication systems will not only support traditional communication, but also support, for example, Device to Device (D2D) communication, Machine To Machine (M2M) communication, Machine Type Communication (MTC), Vehicle To Vehicle (V2V) communication, sidelink (SL) communication, or Vehicle to everything (V2X) communication, etc. The embodiments of the present disclosure may also be applied to these communication systems.

In some embodiments, the communication system in the embodiments of the present disclosure may be applied to a Carrier Aggregation (CA) scenario, a Dual Connectivity (DC) scenario, a Standalone (SA) network distribution scenario or a Non-Standalone (NSA) network distribution scenario.

In some embodiments, the communication system in the embodiments of the present disclosure may be applied to an unlicensed spectrum, and the unlicensed spectrum may also be considered as a shared spectrum. Alternatively, the communication system in the embodiments of the present disclosure may also be applied to a licensed spectrum, and the licensed spectrum may also be considered as a non-shared spectrum.

In some embodiments, the communication system in the embodiments of the present disclosure may be applied to a Frequency Range 1 (FR1) band (corresponding to a frequency band from 410 MHz to 7.125 GHz), applied to a FR2 (corresponding to a frequency band from 24.25 GHz to 52.6 GHz), and also applied to new frequency ranges, such as a higher frequency band corresponding to a frequency band from 52.6 GHz to 71 GHz or a higher frequency band corresponding to a frequency band from 71 GHz to 114.25 GHz.

The embodiments of the present disclosure are described in conjunction with a network device and a terminal device. The terminal device may also be referred to as UE, an access terminal, a user unit, a user station, a mobile station, a remote station, a remote terminal, a mobile device, a user terminal, a terminal, a wireless communication device, a user agent or a user apparatus, etc.

The terminal device may be a Station (STA) in WLAN, a cellular telephone, a cordless telephone, a Session Initiation Protocol (SIP) telephone, a Wireless Local Loop (WLL) station, a Personal Digital Assistant (PDA) device, a handheld device having a wireless communication function, a computing device or other processing device connected to a wireless modem, a vehicle-mounted device, a wearable device, a terminal device in a next generation communication system such as an NR network, or a terminal device in a future evolved Public Land Mobile Network (PLMN) network, etc.

In the embodiments of the present disclosure, the terminal device may be deployed on land, including indoor or outdoor, hand-held device, wearable or vehicle-mounted. The terminal device may also be deployed on the water (such as on ships, etc.). The terminal device may also be deployed in the air (such as, in airplanes, in balloons and in satellites, etc.).

In the embodiments of the present disclosure, the terminal device may be a mobile phone, a Pad, a computer with a wireless transceiver function, a Virtual Reality (VR) terminal device, an Augmented Reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, or a wireless terminal device in smart home, an in-vehicle communication device, a wireless communication chip/Application Specific Integrated Circuit (ASIC)/a System on Chip (SoC), etc.

By way of example and not limitation, in the embodiments of the present disclosure, the terminal device may also be a wearable device.

In the embodiments of the present disclosure, the network device may be a device configured to communicate with a mobile device, and the network device may be an Access Point (AP) in WLAN, a relay station or an access point, a vehicle-mounted device, a wearable device, a network device or gNB or a TRP in an NR network, a network device in a future evolved PLMN network or a network device in an NTN network, etc.

By way of example and not limitation, in the embodiments of the present disclosure, the network device may have mobility characteristics, for example, the network device may be a mobile device. In some embodiments, the network device may be a satellite, a balloon station. For example, the satellite may be a Low Earth Orbit (LEO) satellite, a Medium Earth Orbit (MEO) satellite, a Geostationary Earth Orbit (GEO) satellite, a High Elliptical Orbit (HEO) satellite, and the like. In some embodiments, the network device may also be a base station located on land, water, etc.

In the embodiments of the present disclosure, the network device may provide services for a cell, and the terminal device may communicate with the network device through transmission resources (e.g., frequency-domain resources, or spectrum resources) used by the cell. The cell may be a cell corresponding to the network device (e.g., a base station).

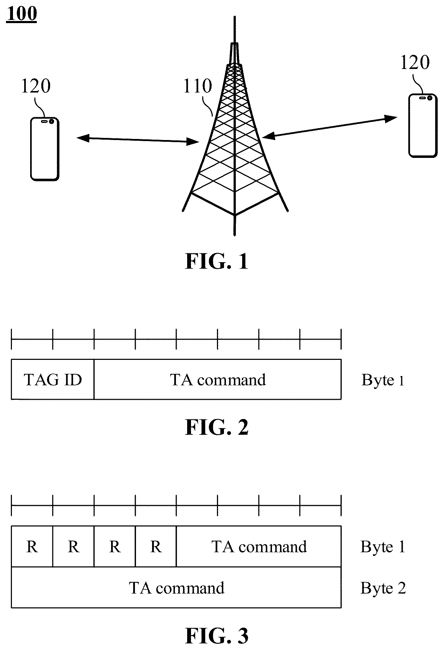

Exemplarily, FIG. 1 illustrates a communication system 100 to which the embodiments of the present disclosure are applied. The communication system 100 may include a network device 110 that communicates with a terminal device 120 (or referred to as a communication terminal, or a terminal). The network device 110 may provide communication coverage for a particular geographic area and may communicate with terminal devices located within the coverage.

FIG. 1 exemplarily illustrates one network device and two terminal devices. Optionally, the communication system 100 may include multiple network devices, and other numbers of terminal devices may be included within the coverage of each network device, which is not limited by the embodiments of the present disclosure.

In some embodiments, the communication system 100 may also include other network entities, such as, network controllers, mobility management entities, etc., which are not limited by the embodiments of the present disclosure.

It is to be understood that a device having a communication function in the network or system in the embodiments of the present disclosure may be referred to as a communication device. The communication system 100 illustrated in FIG. 1 is taken as an example, the communication device may include a network device 110 and terminal devices 120 that both have the communication function, and the network device 110 and the terminal devices 120 may be the devices described above, which are described herein. The communication device may also include other devices in the communication system 100, such as, network controllers, mobility management entities and other network entities, which are not limited in the embodiments of the present disclosure.

It is to be understood that the terms "system" and "network" are often used interchangeably herein. In the present disclosure, the term "and/or" is only an association relationship describing associated objects and represents that three relationships may exist. For example, A and/or B may represent three conditions: i.e., independent existence of A, existence of both A and B and independent existence of B. In addition, the character "/" in the present disclosure generally indicates that the relationship between the related objects is "or".

The terms used in the embodiments of the present disclosure are used only for explanation of specific embodiments of the present disclosure, and the terms are not intended to limit the present disclosure. The terms "first", "second", "third", "fourth" and the like in the description and claims of the present disclosure and the accompanying drawings are used to distinguish different objects and are not used to describe a particular sequence. Furthermore, the terms "including" and "having" and any variations thereof are intended to cover non-exclusive inclusion.

It is to be understood that the "indicate" mentioned in the embodiments of the present disclosure may be a direct indication, may be an indirect indication, or may be indicative of an association. For example, A indicates B, which may mean that A directly indicates B, for example, B may be obtained through A; it may also mean that A indirectly indicates B, for example, A indicates C, and B may be obtained by C; and it may also indicate that there is an association between A and B.

It is to be understood that "at least one of' mentioned in the embodiments of the present disclosure may represent "one or more of", and "positive integer" mentioned in the embodiments of the present disclosure may represent "values such as 1, 2, 3...", "nonnegative integer" mentioned in the embodiments of the present disclosure may represent "values such as 0, 1, 2, 3...", and "integer" mentioned in the embodiments of the present disclosure may represent "values such as..., -3, -2, -1, 0, 1, 2, 3...". These values may be replaced with any possible values based on the requirements of the embodiments.

It is to be understood that the figure and/or table illustrated in the embodiments of the present disclosure is only an example. Specifically, in some cases, a part of information included in the figure and/or table shown in the embodiments of the present disclosure may constitute optional embodiments separately. For example, each row or column in the table may constitute optional embodiments separately, which is not limited in the present disclosures.

In the description of the embodiments of the present disclosure, the term "correspond" may mean that there is a direct correspondence or an indirect correspondence between the two, may also mean that there is an association relationship between the two, and may also be a relationship between indication and being indicated, configuration and being configured, etc.

In the embodiments of the present disclosure, the "predefined" or "preconfigured" may be achieved by pre-storing corresponding codes, tables or other means used for indicating relevant information in devices (e.g., including terminal devices and network devices), and the specific implementation thereof is not limited in the present disclosure. For example, predefined may refer to what is defined in the protocol.

In the embodiment of the present disclosure, the "protocol" may refer to a standard protocol in the field of communications, which, for example, may be an evolution of an existing LTE protocol, an NR protocol, a Wi-Fi protocol, or protocols related to other communication systems related thereto. The type of the protocol is not limited in the present disclosure.

In order to facilitate understanding of the technical schemes of the embodiments of the present disclosure, TA related to the present disclosure will be described.

In the NR standard, UE may be configured with up to four TAGs in one Cell Group (CG). Specifically, an information field of a TAG may be configured through Radio Resource Control (RRC) signaling as follows. Generally, one CG may include multiple serving cells, and each serving cell may be assigned a TAG ID. Each TAG may have a timing alignment timer (denoted as TimeAlignmentTimer), and the UE may perform timing of the timing alignment timer. When the timing alignment timer expires, the UE may consider that the corresponding TAG has uplink synchronization. When network (NW) adjusts a TA value through Media Access Control (MAC) Control Element (CE) signaling or other signaling during the running of the timing alignment timer, the timing alignment timer may be reset, and the UE may consider that the TAG is in an uplink synchronization state. For example, if a value of the TimeAlignmentTimer is configured to be 500 ms, that is to say, the NW needs to update (adjust) the TA value of the UE once within 500 ms; otherwise, the UE may consider there is uplink synchronization and may initiate a Random Access Channel (RACH) procedure when uplink data arrives.

```
ASN1START.

-- TAG-TAG-CONFIG-START


TAG-Config ::=        SEQUENCE {

   tag-ToReleaseList    SEQUENCE (SIZE (1..maxNrofTAGs)) OF TAG-Id

OPTIONAL,  -- Need N

   tag-ToAddModList    SEQUENCE (SIZE (1..maxNrofTAGs)) OF TAG    OPTIONAL

-- Need N

}


TAG ::=              SEQUENCE {

   tag-Id              TAG-Id,

   timeAlignmentTimer        TimeAlignmentTimer,

   ...

}


TAG-Id ::=            INTEGER (0..maxNrofTAGs-1)


TimeAlignmentTimer ::=      ENUMERATED {ms500, ms750, ms1280, ms1920,

ms2560, ms5120, ms10240, infinity}


-- TAG-TAG-CONFIG-STOP

-- ASN1STOP
```

The calculation formula of timing advance of UE is relatively simple. As illustrated in formula 1 below, the timing advance of UE is that advanced transmission is performed based on taking the first path of the UE receiving a downlink channel, i.e., the first symbol of a slot where the channel is located, as a downlink reference.

$$(N_{TA} + N_{TA,offset}) * T_C \qquad \text{formula 1}$$

In a CG, each serving cell may be pre-configured with a TA offset $n$-*TimingAdvanceOff*set, i.e., the $N_{TA,offset}$ in the above formula 1. Herein, the TA adjustment ($N_{TA}$) is performed based on the preconfigured offset. $T_C$ is the smallest unit of time in the NR system, $T_C = 1/(4096*480kHz)$. $N_{TA}$ is a differential adjustment that may be provided by an MAC CE of network (NW). That is to say, the TA adjustment (new TA) is based on an old TA, and is an adjustment performed forward or backward in the time. The specific calculation manner is as illustrated in formula 2.

$$N_{(TA_{new})} = N_{(TA_{old})} + (T_A - 31) * 16 * 64 * /2^{\mu} \qquad \text{formula 2}$$

The format of the differential adjustment of TA of an MAC CE is illustrated in FIG. 2. That is to say, an adjustment with $T_A$ minimum time units is performed based on a previous TA, and the TA adjustment has the granularity of TAG.

The TAG ID (TAG Identity) in FIG. 2: this field indicates the TAG Identity of the addressed TAG. The TAG containing the Special Cell (SpCell) has the TAG Identity 0. The length of the field is 2 bits.

The TA command in FIG. 2: this field indicates the index value TA (0, 1, 2... 63) used to control the amount of timing adjustment that MAC entity has to apply. The length of the field is 6 bits.

The second one is the acquisition manner of TA, i.e., NW indicates, to UE, an absolute value of TA for the uplink transmission of the UE. For example, an MAC CE of the NW directly gives an absolute value $N_{TA}$ having a value range from 0 to 3846, and an indication range for TA is $N_{TA} = T_A*16*64*2^\mu$, and the absolute value has a length of 12 bits, as illustrated in FIG. 3. Moreover, the TA command is applicable to a Primary Timing Advance Group (PTAG) corresponding to the MAC entity, i.e., the definition of PTAG is including the SpCell. Since the MAC CE is applicable to only the PTAG, the MAC CE does not need to include a TAG-Id.

The TA command in FIG. 3: this field indicates the index value TA used to control the amount of timing adjustment that the MAC entity has to apply. The size of the field is 12 bits.

The R in FIG. 3 is a reserved bit, and is set to be "0".

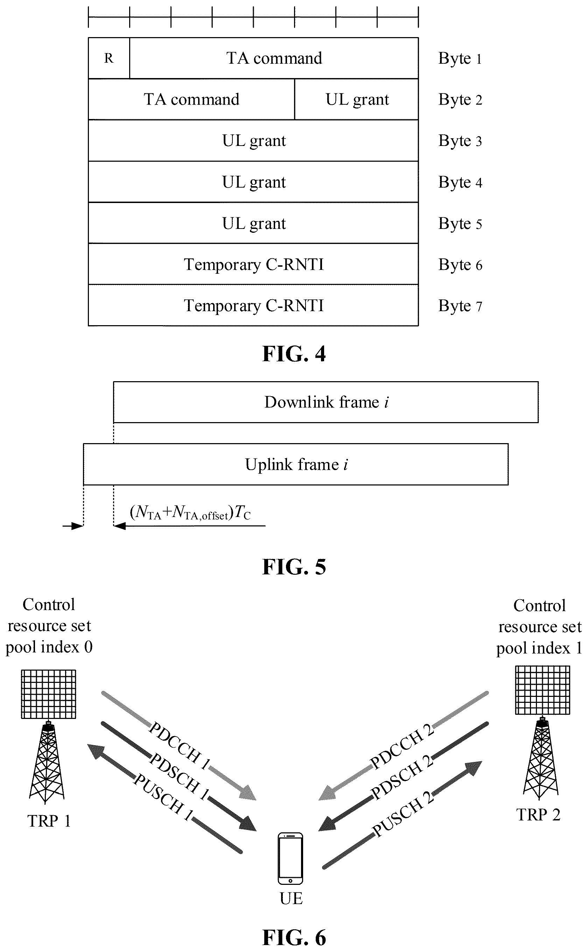

In addition, in an initial access (to a cell) procedure of UE, when the UE sends a PRACH to NW, the UE expects the NW to give the UE a TA indication through an MAC RAR within a certain time window. The specific signaling is illustrated in FIG. 4. In this way, the UE can obtain an initial absolute value of TA that also has a length of 12 bits. As illustrated in FIG. 4, the signaling further includes an Uplink Grant (UL) field and a temporary Cell Radio Network Temporary Identity (C-RNTI) field.

If the UE operates in a multi-TRP mode, a reference point for the timing advance of the UE may be calculated as starting from a downlink reception time point, and an uplink channel or signal may be sent in advance forward a time ($N_{TA}$ + $N_{TA,offset}$)*$T_C$. The relationship between an uplink frame structure and a downlink frame structure from the perspective of the UE may be as illustrated in FIG. 5.

In order to facilitate understanding of the technical schemes of the embodiments of the present disclosure, the uplink multi-TRP transmission related to the present disclosure will be described.

The repetition of a multi-TRP-based Physical Uplink Control Channel (PUCCH)/ Physical Uplink Shared Channel (PUSCH) is supported for the purpose of enhancing coverage of the uplink and transmission reliability. UE needs to send PUCCHs/PUSCHs carrying the same content to different TRPs. For repetition of an PUSCH, the repetition of single DCI (sDCI)-based multiple PUSCHs (multi-PUSCHs) is supported, and PUSCHs are sequentially sent to different TRPs using TA. For the transmission of multi-DCI (mDCI)-based multi-PUSCHs, since there may be no sufficient ideal backhaul between multiple TRPs to be used as connections, multiple TRPs may be used to perform independent scheduling for the UE. Such operation may cause temporal overlap of PUSCHs/PUCCHs for different TRPs, and thus it is also necessary to support different TA updates or TA indications for different TRPs.

For a mechanism that multiple antenna panels of UE simultaneously transmit PUCCHs/PUSCHs to multiple TRPs, similarly, although in the configuration of multi-uplink transmit antenna panels and multi-TRP reception, the UE can only use one TA for the advance transmission within one serving cell. Such restriction should obviously be broken, i.e., the TRP-specific TA acquisition and indication should be supported.

For example, in an intra-cell mDCI-mTRPs scenario, TRP#1 and TRP#2 use the same Physical Cell Identifier (PCI), as illustrated in FIG. 6 (an uplink and downlink scheduling scenario of mDCI-mTRPs). Each TRP may schedule the PDSCH/PUSCH transmission of the TRP through the DCI of the TRP. It is worth to be noted that in the mDCI-mTRP operation, a Control Resource Set (denoted as CORESET) is grouped by an RRC parameter Control Resource Set pool index (denoted as CORESETPoolIndex) of the CORESET. That is to say, the CORESETs having a CORESETPoolIndex of "0" are grouped into one group that correspond to one TRP; and CORESETs having a CORESETPoolIndex of "1" are grouped into another group that correspond to another TRP. When the NW does not configure the CORESETPoolIndex for a CORESET, the CORESET has the CORESETPoolIndex of a default value "0".

In an inter-cell mDCI-mTRPs scenario, TRP#1 in FIG. 6 may be understood as a reference TRP, i.e., a TRP accessed by the UE during initial access. The UE has achieved uplink and downlink synchronization, and has a dedicated PCI#1. For other TRPs, since the NW may select one TRP from up to seven TRPs to additionally perform the service of the uplink transmission for the UE, these TRPs have PCIs different from the PCI of the serving TRP, and usually do not set up the uplink and downlink synchronization with the UE in advance. This is also the difference between the inter-cell multi-TRP operation and the intra-cell multi-TRP operation.

In some embodiments, the UE may be assigned 2 TAGs, and each TAG corresponds to one TRP.

In order to facilitate understanding of the technical schemes of the embodiments of the present disclosure, the TCI state and the spatial relation related to the present disclosure will be described.

The TCI state is used for a downlink spatial-domain QCL (beam) indication and the delivery of QCL information in the time domain and frequency domain. Specifically, a QCL relationship may be simply described as a relationship of large-scale fading from a certain source reference signal to a target reference signal. For the beam indication, when UE obtains the QCL relationship between two source reference signals and a target reference signal from NW, the receive beam for previously receiving a source reference signal may be used when the target reference signal is received.

The indication mechanism using the TCI state is applicable to only downlink channels and signals. The concept of the spatial relation is defined for the uplink beam indication in the NR system, which is also used to express the spatial relation between two reference signals.

In order to provide a unified uplink and downlink beam management mechanism for the NR system, based on the design of the TCI state, the concept of the unified TCI state is proposed, and new important functions are added such as the followings:

Three unified TCI state modes are designed: a joint TCI state suitable for both the uplink channels and signals and the downlink channels and signals, a downlink (DL) TCI state suitable for only the downlink channels and signals, and an uplink (UL) TCI state suitable for only the uplink channels and signals.

The downlink channels (a part of PDCCH, PDSCH) and the downlink signals (aperiodic CSI-RS) use the same downlink transmit indication beam using the DL TCI state or the joint TCI state.

The uplink channels (PUCCH, PUSCH) and the uplink signals (Sounding Reference Signal (SRS)) use the same uplink transmit beam using the UL TCI state or the joint TCI state.

The unified TCI state may be dynamically updated and indicated using an MAC CE and/or DCI.

The unified TCI state is suitable for a carrier aggregation scenario, and the beam indication on a single Component Carrier (CC) may be suitable for multiple different CCs.

The uplink beam indication may be given together with an uplink power control parameter through the UL TCI state or the joint TCI state.

The unified TCI state supports an inter-cell beam management capability.

In order to better understand the meaning of the unified TCI state, the RRC parameter configuration of the unified TCI state may be referred to as followings.

```
TCI-State ::=              SEQUENCE {
    tci-StateId             TCI-StateId,
    qcl-Type1               QCL-Info,
    qcl-Type2               QCL-Info    OPTIONAL,   -- Need R
    ...
}


QCL-Info ::=              SEQUENCE {
    cell                  ServCellIndex    OPTIONAL,   -- Need R
    bwp-Id                  BWP-Id    OPTIONAL, -- Cond CSI-RS-Indicated
    referenceSignal          CHOICE {
        csi-rs                NZP-CSI-RS-ResourceId,
        ssb                 SSB-Index
    },
```

```
    qcl-Type                ENUMERATED {typeA, typeB, typeC, typeD},

    ...;

    [[

    additionalPCI-r17         AdditionalPCIIndex-r17   OPTIONAL   -- Need R

    ]]

}


DLorJoint-TCIState-r17 ::=      SEQUENCE {

    tci-StateUnifiedId-r17        TCI-StateId,

    qcl-Type1-r17              QCL-Info,

    qcl-Type2-r17              QCL-Info    OPTIONAL,  -- Need R

    ul-powerControl-r17          Uplink-powerControlId-r17 OPTIONAL,  -- Need R

    pathlossReferenceRS-Id-r17    PUSCH-PathlossReferenceRS-Id  OPTIONAL   -- Need
S

}


UL-TCIState-r17 ::=          SEQUENCE {

    ul-TCIState-Id-r17           UL-TCIState-Id-r17,

    servingCellId-r17            ServCellIndex   OPTIONAL,  -- Need S

    referenceSignal-r17           CHOICE {

        ssb-Index-r17              SSB-Index,

        csi-RS-Index-r17            NZP-CSI-RS-ResourceId,

        srs-r17                 PUCCH-SRS

    },

    additionalPCI-r17           AdditionalPCIIndex-r17  OPTIONAL,  -- Need R

    ul-powerControl-r17          Uplink-powerControlId-r17  OPTIONAL,  -- Need R

    pathlossReferenceRS-Id-r17     PUSCH-PathlossReferenceRS-Id OPTIONAL   -- Need
S

}
```

In some embodiments, a TA value used by an uplink channel or signal may be indicated while indicating the TCI state/spatial relation.

In order to facilitate understanding of the technical schemes of the embodiments of the present disclosure, the problem solved by the present disclosure will be described.

The TA acquisition based on a random access channel procedure is introduced for an initial access procedure of a single TRP. Since UE does not have a UE-dedicated RRC configuration before completing a RACH procedure, an QCL indication of a TCI state based on the RRC configuration cannot be used, and thus, a fixed QCL assumption is used in various operations of the random access channel procedure, which lacks flexibility.

Based on the above problem, the present disclosure proposes a TA acquisition scheme suitable for the uplink transmission scenarios of intra-cell multi-TRPs and/or inter-cell multi-TRPs, and in a random access channel procedure, it is possible to flexibly set a QCL relationship between different operations, to satisfy the uplink transmission requirements.

In order to facilitate understanding of the technical solutions of the embodiments of the present disclosure, related technologies of the embodiments of the present disclosure are described below. The following related technologies used as optional solutions may be combined with technical solution of the embodiments of the present disclosure in various ways, and the combinations belong to the scope of protection of the embodiments of the present disclosure.

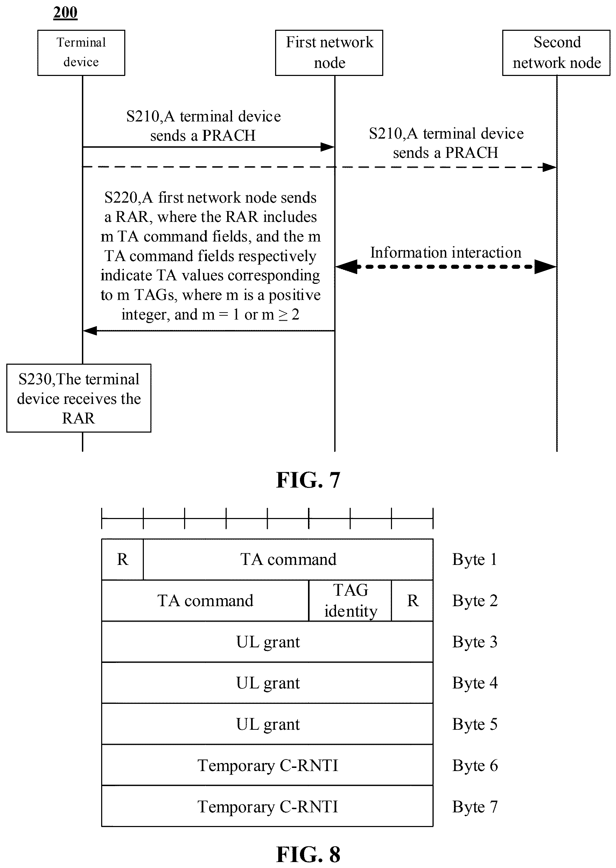

FIG. 7 is a schematic flowchart of a method 200 for wireless communication according to an embodiment of the present disclosure. As illustrated in FIG. 7, the method 200 for wireless communication may include at least some of the following content.

In operation S210, a terminal device sends a PRACH.

In operation S220, a first network node sends an RAR, where the RAR includes m TA command fields, and the m TA command fields respectively indicate TA values corresponding to m TAGs, where m is a positive integer, and m = 1 or m $\geq$ 2.

In operation S230, the terminal device receives the RAR.

It is to be understood that FIG. 7 illustrates steps or operations of the method 200 for wireless communication, but these steps or operations are merely examples, and other operations or modifications of various operations in FIG. 7 may be performed in the embodiment of the present disclosure.

In the embodiment of the present disclosure, a network node may also be referred to as a TRP or another device (such as a micro base station) having similar functions, which is not limited in the present disclosure.

In the embodiment of the present disclosure, the network node receiving the PRACH may be the first network node or another network node (such as a second network node), which is not limited in the present disclosure.

Specifically, for example, it is assumed that the network node receiving the PRACH is the network node x, in a first step of a random access channel procedure, the terminal device may send the PRACH based on the downlink reference reception time; the network node x may measure the arrival time of the PRACH, and calculate a TA value of UE for the network node x (for example, the network node x measures a correct TA value required by the terminal device through the random access preamble carried in the PRACH); and the network node x may notify the terminal device of the measured TA value through a MAC RAR, or the network node x may notify the network node y of the measured TA value, and then the network node y may notify the terminal device of the TA value acquired from the network node x through the MAC RAR.

It is to be understood that the MAC RAR may be understood as MAC layer signaling carried by a PDCCH RAR and a PDSCH RAR scheduled by the PDCCH RAR. In addition, the terminal device expects to maintain a QCL relationship between a Demodulation Reference Signal (DMRS) of the PDCCH carrying the RAR and a PDSCH DRMS.

Specifically, the MAC RAR is control information of the MAC, and is sent from a NW to the UE. The transmission of RAR at the physical layer originates from the data of MAC, and is carried by the PDSCH scheduled by the PDCCH.

In the embodiment of the present disclosure, one TAG may correspond to one network node (e.g., the TRP). That is to say, m TAGs respectively correspond to m network nodes (e.g., the TRPs). In other words, a part or all of the TA information carried in the RAR may be acquired by the first network node from one or more other network nodes.

In some embodiments, the embodiments of the present disclosure may be applied to inter-cell multiple network nodes (e.g., the inter-cell multi-TRPs), or the embodiments of the present disclosure may be applied to intra-cell multiple network nodes (e.g., the intra-cell multi-TRPs). Specifically, for example, the terminal device needs to respectively initiate random access channel procedures for different network nodes (e.g., the TRPs) to obtain TA values specific to the network nodes (e.g., TRP-specific TA values).

In some embodiments, the multiple network nodes may support an m-DCI TA acquisition procedure, i.e., each network node sends a message to the terminal device through DCI; and/or, the multiple network nodes may support an s-DCI TA acquisition procedure, i.e., the multiple network nodes send messages to the terminal device through one piece of DCI.

For example, the multi-TRPs (MTRPs) may support a multi-DCI (M-DCI) TA acquisition procedure, and in this case, there can be no better backhaul connection between the M-DCI MTRPs, and each TRP completes independent scheduling of the same UE. Each TRP may be identified with values "0" and "1" of the CORESETPoolIndex.

For example, the MTRPs may support a single-DCI (S-DCI) TA acquisition procedure, and in this case, there can be better backhaul connections between the multiple MTRPs, and thus one TRP is supported to schedule uplink and downlink transmissions between the UE and two TRPs. However, the parameter CORESETPoolIndex is not configured, or the parameter CORESETPoolIndex can be only one value that is always set to be "0" or "1".

In some embodiments, the embodiments of the present disclosure may be applied to a 4-step random access channel procedure or a 2-step random access channel procedure.

In some implementations, the maximum value of m is 4, since the terminal device can be configured with up to 4 TAGs.

In some embodiments, the RAR may include m TA information groups, where each of the m TA information groups includes a TA command field and a TAG identity field, and a TAG identity field in an i-th TA information group indicates a TAG corresponding to a TA value indicated by a TA command field in the i-th TA information group, where i is a positive integer, and $1 \leq i \leq m$.

For example, m = 1, the RAR may be as illustrated in FIG. 8, herein, the TA command field occupies 12 bits, the TAG ID field occupies 2 bits, and R represents a preserved or reserved field.

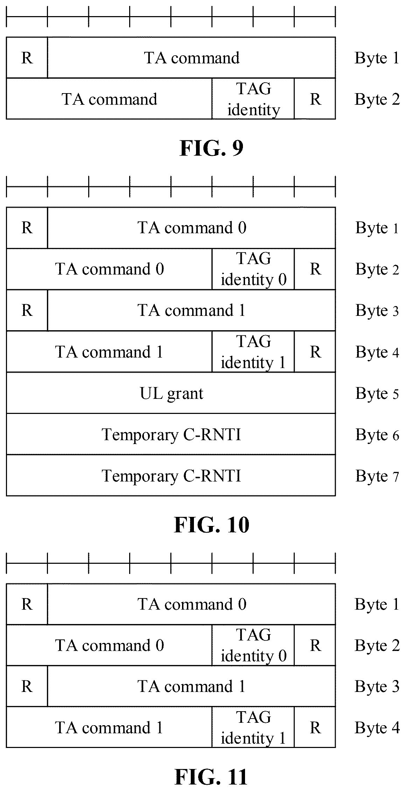

For another example, m = 1, the RAR may be as illustrated in FIG. 9, herein, the TA command field occupies 12 bits, the TAG ID field occupies 2 bits, and R represents a preserved or reserved field. Compared with the RAR illustrated in FIG. 8, an UL grant field for assigning uplink resources for a Message 3 and a temporary C-RNTI field for receiving a Message 4 are deleted. That is to say, the RAR may be simplified, and many contents are invalid for indication of TA, such as, the UL grant for assigning uplink resources for a Message 3 and the temporary C-RNTI for receiving a Message 4. Therefore, there is room to simplify the content of the RAR, so that the signaling overhead of the RAR can be reduced.

For another example, m = 2, the RAR may be as illustrated in FIG. 10, herein, the TA command field occupies 12 bits, the TAG ID field occupies 2 bits, and R represents a preserved or reserved field. The first one of TA information groups includes a TA command 0 field and a TAG ID 0 field, and the second one of the TA information groups includes a TA command 1 field and a TAG ID 1 field. Herein, the TAG ID 0 field indicates a TAG corresponding to a TA value indicated by the TA command 0 field, and the TAG ID 1 field indicates a TAG corresponding to a TA value indicated by the TA command 1 field.

For another example, m = 2, the RAR may be as illustrated in FIG. 11, herein, the TA command field occupies 12 bits, the TAG ID field occupies 2 bits, and R represents a preserved or reserved field. The first one of TA information groups includes a TA command 0 field and a TAG ID 0 field, and the second one of the TA information groups includes a TA command 1 field and a TAG ID 1 field. Herein, the TAG ID 0 field indicates a TAG corresponding to a TA value indicated by the TA command 0 field, and the TAG ID 1 field indicates a TAG corresponding to a TA value indicated by the TA command 1 field. Compared with the RAR illustrated in FIG. 10, an UL grant field for assigning uplink resources for a Message 3 and a temporary C-RNTI field for receiving a Message 4 are deleted. That is to say, the RAR may be simplified, and many contents are invalid for indication of TA, such as, the UL grant for assigning uplink resources for a Message 3 and the temporary C-RNTI for receiving a Message 4. Therefore, there is room to simplify the content of the RAR, so that the signaling overhead of the RAR can be reduced.

In some embodiments, the RAR may include a first information field.

Herein, the first information field indicates a type of the RAR.

That is to say, in the embodiment, an information field indicating the type of the RAR may be added into the RAR, and the terminal device may obtain the type of the RAR based on the information field, thereby obtaining formation from the RAR more clearly, and optimizing the RAR transmission.

In some embodiments, the type of the RAR may include at least one of:

an RAR for acquiring only a TA value;
an RAR for acquiring only a TA value and a TAG identity;
an RAR for acquiring only a TA value and an uplink grant;
an RAR for acquiring only a TA value, a TAG identity, and an uplink grant; or
an RAR for a random access channel procedure.

Specifically, in the case where the type of the RAR is the RAR for a random access channel procedure, the RAR is a conventional RAR (i.e., an unsimplified RAR). The terminal device may continue the random access channel procedure after receiving the RAR for a random access channel procedure.

In some embodiments, the terminal device may terminate the random access channel procedure after receiving the RAR for acquiring only a TA value.

In some embodiments, the terminal device may terminate the random access channel procedure after receiving the RAR for acquiring only a TA value and a TAG identity.

In some embodiments, the first information field may occupy one bit.

In some embodiments, the first information field may occupy two bits. Of course, the first information field may also occupy more bits.

Specifically, for example, the type of the RAR includes the RAR for acquiring only a TA value. For example, the first information field occupies one bit, and the bit having a value of 0 indicates the RAR for acquiring only a TA value, or the bit having a value of 1 indicates the RAR for acquiring only a TA value.

Specifically, for example, the type of the RAR includes the RAR for acquiring only a TA value and a TAG identity. For example, the first information field occupies one bit, and the bit having a value of 0 indicates the RAR for acquiring only a TA value and a TAG identity, or the bit having a value of 1 indicates the RAR for acquiring only a TA value and a TAG identity.

Specifically, for example, the type of the RAR includes the RAR for acquiring only a TA value and an uplink grant. For example, the first information field occupies one bit, and the bit having a value of 0 indicates the RAR for acquiring only a TA value and an uplink grant, or the bit having a value of 1 indicates the RAR for acquiring only a TA value and an uplink grant.

Specifically, for example, the type of the RAR includes the RAR for acquiring only a TA value, a TAG identity, and an uplink grant. For example, the first information field occupies one bit, and the bit having a value of 0 indicates the RAR for acquiring only a TA value, a TAG identity, and an uplink grant, or the bit having a value of 1 indicates the RAR for acquiring only a TA value, a TAG identity, and an uplink grant.

Specifically, for example, the type of the RAR includes the RAR for a random access channel procedure. For example, the first information field occupies one bit, and the bit having a value of 0 indicates the RAR for a random access channel procedure, or the bit having a value of 1 indicates the RAR for a random access channel procedure.

Specifically, for example, the type of the RAR includes the RAR for acquiring only a TA value and the RAR for a random access channel procedure. For example, the first information field occupies one bit. Herein, the bit having a value of 0 indicates the RAR for acquiring only a TA value, and the bit having a value of 1 indicates the RAR for a random access channel procedure. Alternatively, the bit having a value of 1 indicates the RAR for acquiring only a TA value, and the bit having a value of 0 indicates the RAR for a random access channel procedure.

Specifically, for example, the type of the RAR includes the RAR for acquiring only a TA value and a TAG identity as well as the RAR for a random access channel procedure. For example, the first information field occupies one bit. Herein, the bit having a value of 0 indicates the RAR for acquiring only a TA value and a TAG identity, and the bit having a value of 1 indicates the RAR for a random access channel procedure. Alternatively, the bit having a value of 1 indicates the RAR for acquiring only a TA value and a TAG identity, and the bit having a value of 0 indicates the RAR for a random access channel procedure.

Specifically, for example, the type of the RAR includes the RAR for acquiring only a TA value, a TAG identity and an uplink grant as well as the RAR for a random access channel procedure. For example, the first information field occupies one bit. Herein, the bit having a value of 0 indicates the RAR for acquiring only a TA value, a TAG identity and an uplink grant, and the bit having a value of 1 indicates the RAR for a random access channel procedure. Alternatively, the bit having a value of 1 indicates the RAR for acquiring only a TA value, a TAG identity and an uplink grant, and the bit having a value of 0 indicates the RAR for a random access channel procedure.

Specifically, for example, the type of the RAR includes: the RAR for acquiring only a TA value, the RAR for acquiring only a TA value and a TAG identity, and the RAR for a random access channel procedure. For example, the first information field occupies two bits. Herein, the two bits having a value of 00 indicates the RAR for acquiring only a TA value, the two bits having a value of 01 indicates the RAR for acquiring only a TA value and a TAG identity, the two bits having a value of 10 indicates the RAR for a random access channel procedure, and a value of 11 is reserved. Alternatively, the two bits having a value of 00 indicates the RAR for acquiring only a TA value and a TAG identity, the two bits having a value of 01 indicates the RAR for acquiring only a TA value, the two bits having a value of 10 indicates the RAR for a random access channel procedure, and the value of 11 is reserved. Alternatively, the two bits having a value of 00 indicates the RAR for acquiring only a TA value, the two bits having a value of 01 indicates the RAR for a random access channel procedure, the two bits having a value of 10 indicates the RAR for acquiring only a TA value and a TAG identity, and the value of 11 is reserved. Alternatively, the two bits having a value of 00 indicates the RAR for a random access channel procedure, the two bits having a value of 01 indicates the RAR for acquiring only a TA value, the two bits having a value of 10 indicates the RAR for acquiring only a TA value and a TAG identity, and the value of 11 is reserved. Alternatively, the two bits having a value of 00 indicates the RAR for a random access channel procedure, the two bits having a value of 01 indicates the RAR for acquiring only a TA value and a TAG identity, the two bits having a value of 10 indicates the RAR for acquiring only a TA value, and the value of 11 is reserved.

Specifically, for example, the type of the RAR includes: the RAR for acquiring only a TA value, the RAR for acquiring only a TA value, a TAG identity and an uplink grant, and the RAR for a random access channel procedure. For example, the first information field occupies two bits. Herein, the two bits having a value of 00 indicates the RAR for acquiring only a TA value, the two bits having a value of 01 indicates the RAR for acquiring only a TA value, a TAG identity and an uplink grant, the two bits having a value of 10 indicates the RAR for a random access channel procedure, and a value of 11 is reserved. Alternatively, the two bits having a value of 00 indicates the RAR for acquiring only a TA value, a TAG identity and an uplink grant, the two bits having a value of 01 indicates the RAR for acquiring only a TA value, the two bits having a value of 10 indicates the RAR for a random access channel procedure, and the value of 11 is reserved. Alternatively, the two bits having a value of 00 indicates the RAR for acquiring only a TA value, the two bits having a value of 01 indicates the RAR for a random access channel procedure, the two bits having a value of 10 indicates the RAR for acquiring only a TA value, a TAG identity and an uplink grant, and the value of 11 is reserved. Alternatively, the two bits having a value of 00 indicates the RAR for a random access channel procedure, the two bits having a value of 01 indicates the RAR for acquiring only a TA value, the two bits having a value of 10 indicates the RAR for acquiring only a TA value, a TAG identity and an uplink grant, and the value of 11 is reserved. Alternatively, the two bits having a value of 00 indicates the RAR for a random access channel procedure, the two bits having a value of 01 indicates the RAR for acquiring only a TA value, a TAG identity and an uplink grant, the two bits having a value of 10 indicates the RAR for acquiring only a TA value, and the value of 11 is reserved.

Specifically, for example, the type of the RAR includes: the RAR for acquiring only a TA value and a TAG identity, the RAR for acquiring only a TA value, a TAG identity and an uplink grant, and the RAR for a random access channel procedure. For example, the first information field occupies two bits. Herein, the two bits having a value of 00 indicates the RAR for acquiring only a TA value and a TAG identity, the two bits having a value of 01 indicates the RAR for acquiring only a TA value, a TAG identity and an uplink grant, the two bits having a value of 10 indicates the RAR for a random access channel procedure, and a value of 11 is reserved. Alternatively, the two bits having a value of 00 indicates the RAR for acquiring only a TA value, a TAG identity and an uplink grant, the two bits having a value of 01 indicates the RAR for acquiring only a TA value and a TAG identity, the two bits having a value of 10 indicates the RAR for a random access channel procedure, and the value of 11 is reserved. Alternatively, the two bits having a value of 00 indicates the RAR for acquiring only a TA value and a TAG identity, the two bits having a value of 01 indicates the RAR for a random access channel procedure, the two bits having a value of 10 indicates the RAR for acquiring only a TA value, a TAG identity and an uplink grant, and the value of 11 is reserved. Alternatively, the two bits having a value of 00 indicates the RAR for a random access channel procedure, the two bits having a value of 01 indicates the RAR for acquiring only a TA value and a TAG identity, the two bits having a value of 10 indicates the RAR for acquiring only a TA value, a TAG identity and an uplink grant, and the value of 11 is reserved. Alternatively, the two bits having a value of 00 indicates the RAR for a random access channel procedure, the two bits having a value of 01 indicates the RAR for acquiring only a TA value, a TAG identity and an uplink grant, the two bits having a value of 10 indicates the RAR for acquiring only a TA value and a TAG identity, and the value of 11 is reserved.

Specifically, for example, the type of the RAR includes: the RAR for acquiring only a TA value, the RAR for acquiring only a TA value and a TAG identity, the RAR for acquiring only a TA value, a TAG identity and an uplink grant, and the RAR for a random access channel procedure. For example, the first information field occupies two bits. Herein, the two bits having a value of 00 indicates the RAR for acquiring only a TA value, the two bits having a value of 01 indicates the RAR for acquiring only a TA value and a TAG identity, the two bits having a value of 10 indicates the RAR for acquiring only a TA value, a TAG identity and an uplink grant, and the two bits having a value of 11 indicates the RAR for a random access channel procedure. Alternatively, the two bits having a value of 00 indicates the RAR for acquiring only a TA value, a TAG identity and an uplink grant, the two bits having a value of 01 indicates the RAR for acquiring only a TA value and a TAG identity, the two bits having a value of 10 indicates the RAR for acquiring only a TA value, and the two bits having a value of 11 indicates the RAR for a random access channel procedure. Alternatively, the two bits having a value of 00 indicates the RAR for a random access channel procedure, the two bits having a value of 01 indicates the RAR for acquiring only a TA value, the two bits having a value of 10 indicates the RAR for acquiring only a TA value and a TAG identity, and the two bits having a value of 11 indicates the RAR for acquiring only a TA value, a TAG identity and an uplink grant.

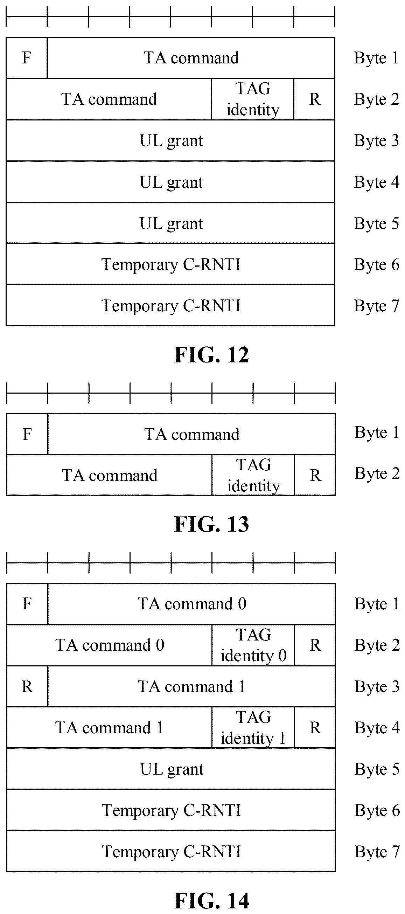

For example, m = 1, the RAR may be as illustrated in FIG. 12. Herein, the TA command field occupies 12 bits, the TAG ID field occupies 2 bits, F represents the first information field and occupies 1 bit, and R represents a preserved or reserved field.

For another example, m = 1, the RAR may be as illustrated in FIG. 13. Herein, the TA command field occupies 12 bits, the TAG ID field occupies 2 bits, F represents the first information field and occupies 1 bit, and R represents a preserved or reserved field. Compared with the RAR illustrated in FIG. 12, an UL grant field for assigning uplink resources for a Message 3 and a temporary C-RNTI field for receiving a Message 4 are deleted. That is to say, the RAR may be simplified, and many contents are invalid for indication of the TA, such as, the UL grant for assigning uplink resources for a Message 3 and the temporary C-RNTI for receiving a Message 4. Therefore, there is room to simplify the content of the RAR, so that the signaling overhead of the RAR can be reduced.

For another example, m = 2, the RAR may be as illustrated in FIG. 14. Herein, the TA command field occupies 12 bits, the TAG ID field occupies 2 bits, F represents the first information field and occupies 1 bit, and R represents a preserved or reserved field. The first one of TA information groups includes a TA command 0 field and a TAG ID 0 field, and the second one of the TA information groups includes a TA command 1 field and a TAG ID 1 field. Herein, the TAG ID 0 field indicates a TAG corresponding to a TA value indicated by the TA command 0 field, and the TAG ID 1 field indicates a TAG corresponding to a TA value indicated by the TA command 1 field.

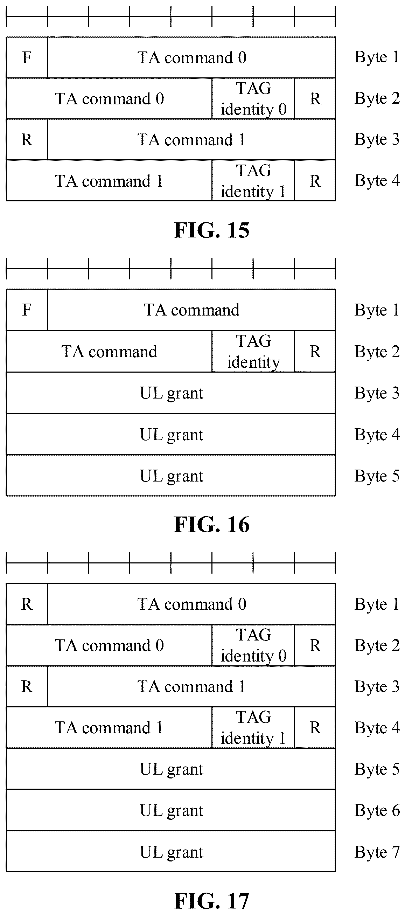

For another example, m = 2, the RAR may be as illustrated in FIG. 15. Herein, the TA command field occupies 12 bits, the TAG ID field occupies 2 bits, F represents the first information field and occupies 1 bit, and R represents a preserved or reserved field. The first one of TA information groups includes a TA command 0 field and a TAG ID 0 field, and the second one of the TA information groups includes a TA command 1 field and a TAG ID 1 field. Herein, the TAG ID 0 field indicates a TAG corresponding to a TA value indicated by the TA command 0 field, and the TAG ID 1 field indicates a TAG corresponding to a TA value indicated by the TA command 1 field. Compared with the RAR illustrated in FIG. 14, an UL grant field for assigning uplink resources for a Message 3 and a temporary C-RNTI field for receiving a Message 4 are deleted. That is to say, the RAR may be simplified, and many contents are invalid for indication of TA, such as, the UL grant for assigning uplink resources for a Message 3 and the temporary C-RNTI for receiving a Message 4. Therefore, there is room to simplify the content of the RAR, so that the signaling overhead of the RAR can be reduced.

In some embodiments, after the terminal device sends a Scheduling Request (SR) and a PRACH, the RAR sent by the first network node to the terminal device may include: an uplink grant field (which may occupy one or more bytes) and a TA command, which has the advantage that the TA value required by the UE and the resources for the uplink transmission can be given in one RAR.

For example, m = 1, the RAR may be as illustrated in FIG. 16. Herein, the TA command field occupies 12 bits, the TAG ID field occupies 2 bits, F represents the first information field and occupies 1 bit, R represents a preserved or reserved field, and an UL grant field occupies 3 bytes. That is to say, the RAR may be simplified, and many contents are invalid for indication of TA, such as, an UL grant for assigning uplink resources for a Message 3 and a temporary C-RNTI for receiving a Message 4. Therefore, there is room to simplify the content of the RAR, so that the signaling overhead of the RAR can be reduced.

For another example, m = 2, the RAR may be as illustrated in FIG. 17. Herein, the TA command field occupies 12 bits, the TAG ID field occupies 2 bits, F represents the first information field and occupies 1 bit, R represents a preserved or reserved field, and an UL grant field occupies 3 bytes. The first one of TA information groups includes a TA command 0 field and a TAG ID 0 field, and the second one of the TA information groups includes a TA command 1 field and a TAG ID 1 field. Herein, the TAG ID 0 field indicates a TAG corresponding to a TA value indicated by the TA command 0 field, and the TAG ID 1 field indicates a TAG corresponding to a TA value indicated by the TA command 1 field. That is to say, the RAR may be simplified, and many contents are invalid for indication of TA, such as, an UL grant for assigning uplink resources for a Message 3 and a temporary C-RNTI for receiving a Message 4. Therefore, there is room to simplify the content of the RAR, so that the signaling overhead of the RAR can be reduced.

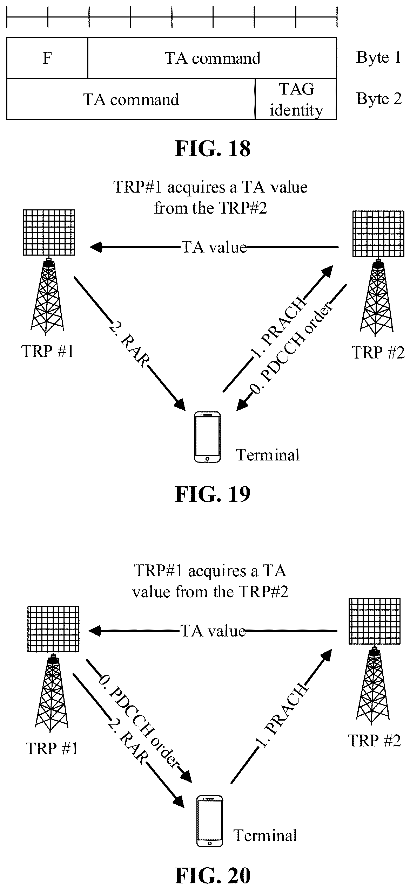

For another example, m = 1, the RAR may be as illustrated in FIG. 18. Herein, the TA command field occupies 12 bits, the TAG ID field occupies 2 bits, and F represents the first information field and occupies 2 bits.

In some embodiments, different network nodes may be configured with different target receive power. Specifically, it is considered that different network nodes (e.g., TRPs) have different requirements for the power for receiving the PRACH, the network device (e.g., the NW) may configure, for the terminal device, target receive power dedicated to the network node (e.g., the TRP), i.e., P_PRACH, target, f, c.

In some embodiments, different network nodes may be configured with different power ramping steps and/or power ramping counters. Specifically, after the terminal device sends the PRACH to the network node (e.g., the TRP), the terminal device may wait for receiving the RAR within a time window. If there is no RAR, the terminal device may perform repetition of the PRACH after the power ramping. For each of different network nodes (e.g., TRPs), the network device (e.g., the NW) should configure, for the terminal device, an independent power ramping step (including a high-priority random access channel procedure and a general-priority random access channel procedure) and an independent power ramping counter. The function of this counter is to stop ramping the power after the certain number of times of the power ramping, so as to avoid excessive transmit power, which causes interference.

Specifically, for example, RRC signaling for the network device (e.g., the NW) to configure the independent power ramping step (including the high-priority random access channel procedure and the general-priority random access channel procedure) for the terminal device may include the power ramping step and the power ramping step high priority.

The power ramping step (denoted as powerRampingStep) is the power-ramping factor; and the power ramping step high priority (denoted as powerRampingStepHighPriority) is the power-ramping factor in the case of prioritized random access channel procedure.

Specifically, for example, UE variables involved in configuring the independent power ramping step (including the high-priority random access channel procedure and the general-priority random access channel procedure) by the network device (e.g., the NW) for the terminal device may include the followings:

A counter of random access preamble power ramping (denoted as PREAMBLE_POWER_RAMPING_COUNTER); and

A step of random access preamble power ramping (denoted as PREAMBLE_POWER_RAMPING_STEP).

In some embodiments, before the terminal device sends the PRACH, the terminal device may receive a PDCCH order, where the PDCCH order is used to trigger the terminal device to send the PRACH.

For example, the terminal device receives a PDCCH order sent by a first network node, or the terminal device receives a PDCCH order sent by another network node (e.g., a second network node).

Specifically, when the network device (e.g., the NW) considers that the terminal device needs to acquire TA from the TRP, the network device (e.g., the NW) may trigger, through the PDCCH order, the terminal device to send the PRACH.

In the first step of the random access channel procedure, the terminal device may send the PRACH based on the downlink reference receive time; the network node x may measure the arrival time of the PRACH, thereby calculating a TA value of the UE for the network node x (e.g., the network node x measures a correct TA value required by the terminal device through a random access preamble carried in the PRACH); and the network node x may notify the terminal device of the measured TA value in a manner of MAC RAR, or the network node x may notify the network node y of the measured TA value, and then the network node y may notify the terminal device of the TA value acquired from the network node x in the manner of MAC RAR.

Specifically, the PDCCH order may be completed in DCI format 1_0. For example, when the DCI format 1_0 is scrambled by a Cell RNTI (C-RNTI) and a Frequency Domain Resource Assignment (FDRA) field has a value that is always set to be 1, the terminal device should understand the DCI as a PDCCH order. The network device (e.g., the NW) may provide some important parameters for the terminal device to send the PRACH, such as, a random access preamble index, an SSB index, a PRACH mask index (e.g., a RACH occasion (RO)). When the terminal device considers that the DCI is a PDCCH order, the terminal device may send the PRACH based on the following three pieces of indicated important information: the preamble index, the SSB index, and the PRACH mask index (indicating the RO associated with the SSB). The network device (e.g., the NW) may measure a correct TA value required by the terminal device through the preamble sent by the terminal device, and indicate the TA command to the terminal device through the RAR during the Random Access Channel (RACH) procedure.

In some embodiments, the PDCCH order may include at least one of: a CSI-RS index, an ID of an uplink TCI state, or an ID of a joint TCI state.

Specifically, the CSI-RS index in the PDCCH order is associated with a Path Loss (PL) Reference Signal (RS) used to send the PRACH. Since the CSI-RS is beamforming performed by the network for the UE, compared with the SSB, the CSI-RS has more accurate spatial directivity, and is of a UE-specific downlink reference signal. Therefore, the UE may also increase its uplink spatial directivity when sending the PRACH, thereby increasing the accuracy of the network detecting the PRACH.

Specifically, the ID of the uplink TCI state in the PDCCH order is associated with an uplink spatial filter (e.g., an uplink beam) for sending the PRACH, and/or a Downlink (DL) RS included in the ID of the uplink TCI state is associated with the PL RS used to send the PRACH. For the uplink TCI state, in addition to the characteristic of including the SSB index or the CSI-RS index, the uplink TCI state may directly include the PL RS, and the PL RS may be different from the SSB index or the CSI-RS index. Therefore, more flexible uplink beamforming and power control function can be provided.

Specifically, the ID of the joint TCI state in the PDCCH order is associated with the uplink spatial filter (e.g., an uplink beam) for sending the PRACH, and/or a DL RS included in the ID of the joint TCI state is associated with the PL RS used to send the PRACH.

It is to be noted that the PL RS used to send the PRACH may be a CSI-RS index field in the PDCCH order, and the CSI-RS index is different from the SSB index (a cell-specific deployment), and may be used to achieve the terminal device (UE)-specific beamforming. Therefore, the PRACH transmission with more delicate spatial granularity can be provided.

Specifically, the uplink TCI state or the joint TCI state in the unified TCI state may be referred to by the UE for how to implement an uplink spatial transmit filter (beam) for the PRACH. In addition, the DL RS included in the uplink TCI state or the joint TCI state in the unified TCI state may be used as the PL RS for sending the PRACH. For the general flow of the unified TCI state, the network device (e.g., the NW) may configure a TCI state resource pool, such as including 128 TCI states, through the RRC signaling; then activate 8 TCI states or a combination thereof (including two joint TCI states or uplink TCI states) through an MAC CE; and finally notify the UE that the activated TCI state in which the MAC CE is indicated through a TCI state indication field, such as 3 bits, in the DCI.

That is to say, an important parameter among the power control parameters during the process of sending the PRACH is the PL RS, i.e., a reference signal for path loss measurement. The UE needs to measure a downlink path loss through the PL RS. For intra-cell multi-TRPs, the SSB index, or the CSI-RS index, or a DL RS included in the ID of the uplink TCI state or the joint TCI state, indicated in the PDCCH order, may be used as the PL RS. The UE may estimate the path loss through the SSB index of a local cell, or the CSI-RS index of the local cell, or the DL RS in the ID of the uplink TCI state of the local cell or the joint TCI state of the local cell, indicated by the PDCCH command, thereby adjusting the uplink transmit power.

For example, the PDCCH order may include: the CSI-RS index, the ID of the uplink TCI state, or the ID of the joint TCI state.

For another example, the PDCCH order may include: the CSI-RS index and the ID of the uplink TCI state.

For another example, the PDCCH order may include: the CSI-RS index and the ID of the joint TCI state.

For another example, the PDCCH order may include: the ID of the joint TCI state and the ID of the uplink TCI state.

For another example, the PDCCH order may include: the CSI-RS index, the ID of the joint TCI state and the ID of the uplink TCI state.

In some embodiments, the PDCCH order may be associated with an activated PCI. That is to say, no information about the PCI is added into the PDCCH order, and the PDCCH order is limited to an additional PCI in an active state.

For example, in the case where the present embodiments are applied to inter-cell multi network nodes (e.g., the multi-TRPs), the PDCCH order is associated with an activated PCI. That is to say, no information about the PCI is added into the PDCCH order, and the PDCCH order is limited to the additional PCI in the active state.

In some embodiments, the PDCCH order may include n bits. The n bits indicate a PCI corresponding to the CSI-RS index, or the DL RS associated with the ID of the uplink TCI state or associated with the ID of the joint TCI state in the PDCCH order, or the n bits indicate a PCI index corresponding to the CSI-RS index, or the DL RS associated with the ID of the uplink TCI state or associated with the ID of the joint TCI state in the PDCCH order, where n is a positive integer.

For example, in the case where the present embodiments are applied to inter-cell multi network nodes (e.g., the multi-TRPs), the PDCCH order includes n bits. The n bits indicate a PCI corresponding to the CSI-RS index, or the DL RS associated with the ID of the uplink TCI state or associated with the ID of the joint TCI state in the PDCCH order, or the n bits indicate a PCI index corresponding to the CSI-RS index or the DL RS associated with the ID of the uplink TCI state or associated with the ID of the joint TCI state in the PDCCH order, where n is a positive integer.

In some embodiments, in the case where the n bits indicate the PCI index corresponding to the CSI-RS index or the DL RS associated with the ID of the uplink TCI state or associated with the ID of the joint TCI state in the PDCCH order, the PCI index may be obtained by performing further encoding based on multiple PCIs configured for the terminal device. For example, n = 3. Of course, in the embodiments, n may have another value, which is not limited in the embodiments.

In some embodiments, in a case where the n bits indicate the PCI corresponding to the CSI-RS index, or the DL RS associated with the ID of the uplink TCI state or associated with the ID of the joint TCI state in the PDCCH order, where n = 10. Of course, in the embodiments, n may have another value, which is not limited in the embodiments.

Specifically, for the inter-cell multi-TRPs, the PDCCH order should indicate which PCI the DL RS is from, in addition to indicating the CSI-RS index. Therefore, it is necessary to directly add a PCI of 10 bits or a PCI index of 3 bits into the PDCCH order. It is to be noted herein that the PCI index is re-encoding performed on the up to 7 PCIs that is already configured for the UE, thus, the PCI index of 3 bits is sufficient, the purpose of which is to reduce overhead.

In some embodiments, the PDCCH order may include one bit, where a value of the one bit indicates that the PDCCH order is associated with an activated PCI, or the value of the one bit indicates that the PDCCH order is associated with a PCI of a serving cell.

Specifically, for example, in the case where the embodiment is applied to inter-cell multi network nodes (e.g., multi-TRPs), the PDCCH order includes one bit, and a value of the one bit indicates that the PDCCH order is associated with the activated PCI, or the value of the one bit indicates that the PDCCH order is associated with the PCI of the serving cell. For example, the one bit having a value of 0 indicates that the PDCCH order is associated with the activated PCI, and the one bit having a value of 1 indicates that the PDCCH order is associated with the PCI of the serving cell. For another example, the one bit having the value of 1 indicates that the PDCCH order is associated with the activated PCI, and the one bit having the value of 0 indicates that the PDCCH order is associated with the PCI of the serving cell.

It is to be noted that the activated PCI may also be referred to as the additional PCI.

In some embodiments, the RAR may be received by the terminal device from the first network node, the PDCCH order may be received by the terminal device from the second network node, and the PRACH may be sent by the terminal device to the second network node. That is to say, the RAR corresponds to the first network node, and the PDCCH order and the PRACH correspond to the second network node.

Herein, the first network node may be configured with a type1 Common Search Space (CSS), and the second network node may be not configured with the type 1 CSS.

That is to say, the terminal device may receive the RAR sent by the first network node (e.g., the TRP#1), the terminal device may receive the PDCCH order sent by the second network node (e.g., the TRP#2), and the terminal device may send the PRACH to the second network node (e.g., the TRP#2).

Compared with the traditional single-TRP RACH procedure, the NW may send the PDCCH order to the second network node, thereby avoiding the downlink control channel congestion of the first network node; and the UE may send the PRACH to the second network node that needs TA acquisition, and the second node may calculate a TA value corresponding to the UE.

In some embodiments, the m TA command fields included in the RAR may indicate TA values from the second network node. That is to say, the m TA command fields included in the RAR may be determined by the first network node based on TA values acquired from other network nodes.

It is to be noted that the RAR searches for the PDCCH in only one type 1 CSS, and the CSS is associated with a control resource set (CORESET), and the CORESET is configured with a RRC parameter, i.e., a control resource set pool index (CORESETPoolIndex) (corresponding to a TRP). That is to say, the terminal device may receive the RAR from only one specific network node (TRP).

Specifically, for example, the flowchart of TA acquisition between multiple TRPs may be as illustrated in FIG. 19, the TRP#1 is a TRP sending an RAR, and TRP#2 is a TRP from which UE needs to acquire TA. A network device (e.g., NW) sends a PDCCH order to the UE through the TRP#2 (step 0) to trigger a PRACH (step 1). The TRP#2 measures an uplink arrival time difference of the UE through measuring a RACH preamble sequence of the PRACH on a RACH occasion (RO), and calculates a TA value required to be adjusted by the UE. The TA value is delivered to the TRP#1 through a backhaul between TRPs. The reception of the RAR in step 2 may be understood as MAC layer signaling carried by a PDCCH RAR and a PDSCH RAR scheduled by the PDCCH RAR. In addition, the UE expects to maintain a QCL relationship between a DMRS of the PDCCH carrying the RAR anda PDSCH DRMS.

In some embodiments, the DMRS of the PDCCH order may have a QCL relationship with the PL RS of the PRACH. Since the PDCCH order and the PRACH may correspond to the same TRP, i.e., as illustrated between step 0 and step 1 in FIG. 19, the DMRS of the PDCCH order has the QCL relationship with the PL RS of the PRACH.

In some embodiments, the DMRS of the PDCCH order may have no QCL relationship with the DMRS of the PDCCH for the RAR. That is to say, as illustrated between step 0 and step 2 in FIG. 19, the DMRS of the PDCCH order has no QCL relationship with the DMRS of the PDCCH for the RAR.

In some embodiments, the PDCCH order and the PDCCH for the RAR may be received using respective configured and/or activated TCI states of the PDCCH order and the PDCCH for the RAR, or the PDCCH order and the PDCCH for the RAR may be received using respective configured and/or activated QCL assumptions of the PDCCH order and the PDCCH for the RAR.

In some embodiments, the PDCCH order may be received using a TCI state or a QCL assumption indicated by a control resource set where a PDCCH corresponding to the PDCCH order is located, and/or the PDCCH for the RAR may be received using a TCI state or a QCL assumption indicated by a control resource set associated with a type 1 CSS associated with the RAR.

Specifically, as illustrated in FIG. 19, the terminal device receives the PDCCH order in step 0 using the TCI state or the QCL assumption indicated by the CORESET where the PDCCH corresponding to the PDCCH order is located. The terminal device receives the DMRS of the PDCCH for the RAR in step 2 using the TCI state or the QCL assumption indicated by the CORESET associated with the type 1 CSS associated with the RAR.

It is to be noted that the TCI state is generally configured through the UE-specific RRC, is activated through the MAC CE, and is finally dynamically indicated by the DCI. For the QCL assumption, QCL relationships between various steps may be pre-fixed in the protocol. The advantage is that the pre-fixed QCL relationships may be used when UE does not have a specific RRC configuration, but the disadvantage is that the flexibility is low.

In some embodiments, a TCI state or QCL assumption used to receive the PDCCH order may be different from a TCI state or QCL assumption used to receive the PDCCH for the RAR. Specifically, for example, the terminal device does not expect that the PDCCH order and the PDCCH for the RAR are received using the same TCI state or QCL assumption. That is to say, for the behavior of the UE, the PDCCH order and the subsequent RAR may not be expected to come from one TRP, and use the same downlink TCI state or QCL assumption. From another perspective, the base station does not send the PDCCH order and the RAR via the same TRP.

It is to be noted that the CORESET of the PDCCH order and the CORESET associated with the type 1 CSS where the RAR is located are from different TRPs, and may have different CORESETPoolIndexes.

In some embodiments, a DMRS of a PDSCH for the RAR may have no QCL relationship with a CSI-RS index or an ID of an uplink TCI state or an ID of a joint TCI state used to send the PRACH indicated in the PDCCH order. That is to say, as illustrated between step 1 and step 2 in FIG. 9, the DMRS of the PDSCH for the RAR has no QCL relationship with a CSI-RS index or an ID of an uplink TCI state or an ID of a joint TCI state used to send the PRACH indicated in the PDCCH order.

In some embodiments, the PDSCH for the RAR may be received using a TCI state or a QCL assumption indicated in a PDCCH for the RAR.

Specifically, as illustrated in FIG. 19, for the CSI-RS index or the ID of the uplink TCI state or the ID of the joint TCI state that is referred to by the UE for sending the PRACH in step 1 (i.e., the CSI-RS index or the ID of the uplink TCI state or the ID of the joint TCI state indicated in the PDCCH order for sending the PRACH), the UE may ignore the role of it in RAR. The UE receives the DMRS of the PDSCH for the RAR in step 2 using the TCI state or QCL assumption indicated in the DCI (PDCCH RAR).

In some embodiments, the RAR may be received by the terminal device from the first network node, and the PRACH may be sent by the terminal device to the first network node. Herein, the first network node is configured with the first type 1 CSS.

Specifically, the RAR and the PRACH may correspond to the same network node. Herein, a network node corresponding to the RAR and the PRACH may be configured with the first type 1 CSS. The first type 1 CSS may be activated after the terminal device receives the PDCCH order, or the first type 1 CSS may be activated after the terminal device sends the PRACH. Optionally, the first type 1 CSS may be deactivated after the terminal device receives the RAR.

Specifically, one type 1 CSS is allowed to be configured for each TRP to receive the RAR. The NW may send the RAR via the TRP#2 (instead of sending via the TRP#1). In the step 0, the step 1, and the step 2, the behavior of the UE is the transmission to the TRP#2 or the reception from the TRP#2, and QCL collision does not exist. The first type 1 CSS may be pre-configured, and it is considered that the first type 1 CSS is activated only after the UE receives the PDCCH order or sends the PRACH, and then, the UE searches for the PDCCH in the type 1 CSS, and the PDCCH schedules the PDSCH carrying the RAR.

In some embodiments, both the PDCCH order and the RAR may be received by the terminal device from the first network node, and the PRACH may be sent by the terminal device to the second network node. That is to say, the PDCCH order and the RAR correspond to the first network node, and the PRACH corresponds to the second network node.

Herein, the first network node may be configured with a type 1 CSS and the second network node may be not configured with the type 1 CSS.

That is to say, the terminal device may receive the RAR and the PDCCH order sent by the first network node (e.g., the TRP#1), and the terminal device may send the PRACH to the second network node (e.g., the TRP#2).

In the embodiment, when the second network does not have a downlink control channel, the network may send the PDCCH order using the first network node, to trigger the UE to send the PRACH to the second network node, thereby enabling the second network node to obtain a TA value of the UE for the second network node.

In some embodiments, the m TA command fields included in the RAR may be determined by the first network node based on TA values acquired from other network nodes.

It is to be noted that the RAR searches for the PDCCH in only one type 1 CSS, the CSS is associated with a CORESET, and the CORESET is configured with a RRC parameter, i.e., a control resource set pool index (denoted as CORESETPoolIndex) (corresponding to a TRP). That is to say, the terminal device may receive the RAR from only one specific network node (TRP).

Specifically, for example, the flowchart of TA acquisition between multiple TRPs may be as illustrated in FIG. 20, the network device (e.g., the NW) sends the PDCCH order to the UE through the TRP#1 (step 0) to trigger the PRACH (step 1). The TRP#2 performs uplink synchronization through measuring a PRACH preamble sequence on a RO, and calculates a TA value required to be adjusted by the UE. Then, the TA value of the UE for the TRP#2 is delivered to the TRP#1 through a backhaul link between the TRP#1 and the TRP#2. The TA value is notified by the TRP#1 through the RAR (in step 2).

In some embodiments, the DMRS of the PDCCH order may have no QCL relationship with a PL RS used to send the PRACH. That is to say, in FIG. 20, the PDCCH order and the PRACH correspond to different TRPs, between the step 0 and the step 1, and the DMRS of the PDCCH order has the QCL relationship between and the PL RS of the PRACH.

In some embodiments, the PDCCH order may be received using a TCI state or a QCL assumption indicated by a control resource set where the PDCCH order is located, and a CSI-RS index, an ID of an uplink TCI state or an ID of a joint TCI state used to send the PRACH indicated in the PDCCH order may have a different control resource set pool index from a control resource set where the PDCCH order is located.

Specifically, for example, the terminal device may receive the PDCCH order using a TCI state or a QCL assumption indicated by the CORESET where the PDCCH order is located. Furthermore, the CSI-RS index or the ID of the uplink TCI state or the ID of the joint TCI state included in the PDCCH order may be from another TRP, i.e., having a different CORESETPoolIndex from the CORESET where the PDCCH order is located.

In some embodiments, in FIG. 20, between the step 0 and the step 2, there is no QCL relationship between the DMRS of the PDCCH order and the DMRS of the PDCCH carrying the RAR.

In some embodiments, the DMRS of the PDSCH for the RAR may have no QCL relationship with the CSI-RS index or the ID of the uplink TCI state or the ID of the joint TCI state used to send the PRACH indicated in the PDCCH order.

In some embodiments, the PDSCH for the RAR may be received using a TCI state or a QCL assumption indicated in a PDCCH for the RAR.

It is to be noted that for the uplink power control, i.e., the PL RS, the CSI-RS index or the ID of the uplink TCI state or the ID of the joint TCI state in the PDCCH order in the step 0 is used as the PL RS of the PRACH. The CSI-RS index or the ID of the uplink TCI state or the ID of the joint TCI state indicated in the PDCCH order and the PDCCH order come from different TRPs, i.e., different CORESETPoolIndexes.

In some embodiments, the RAR and the PRACH may correspond to the same network node. Herein, a network node corresponding to the RAR and the PRACH may be configured with the first type 1 CSS. Optionally, the first type 1 CSS may be activated after the terminal device receives the PDCCH order, or the first type 1 CSS may be activated after the terminal device sends the PRACH.

In some embodiments, the first type 1 CSS may be deactivated after the terminal device receives the RAR.

In some embodiments, the network node corresponding to the PDCCH order may be different from the network node corresponding to the RAR and the PRACH.

In some embodiments, the network node corresponding to the PDCCH order may be configured with a second type 1 CSS. Optionally, the second type 1 CSS may be a regular type 1 CSS.

In some embodiments, the RAR may be received by the terminal device from the first network node, the PRACH may be sent by the terminal device to the first network node, and the PDCCH order may be received by the terminal device from the second network node. That is to say, the RAR and the PRACH correspond to the first network node, and the PDCCH order corresponds to the second network node.

Herein, the first network node may be configured with the type 1 CSS and the second network node is may be not configured with the type 1 CSS.

That is to say, the terminal device may receive the RAR sent by the first network node (e.g., the TRP#1), the terminal device may send the PRACH to the first network node (e.g., the TRP#1), and the terminal device may receive the PDCCH order sent by the second network node (e.g., TRP#2).

In the embodiment, the network can avoid the control channel congestion of the first network node, and send the PDCCH order using the second network node which enables coordination between the network nodes to be more flexible.

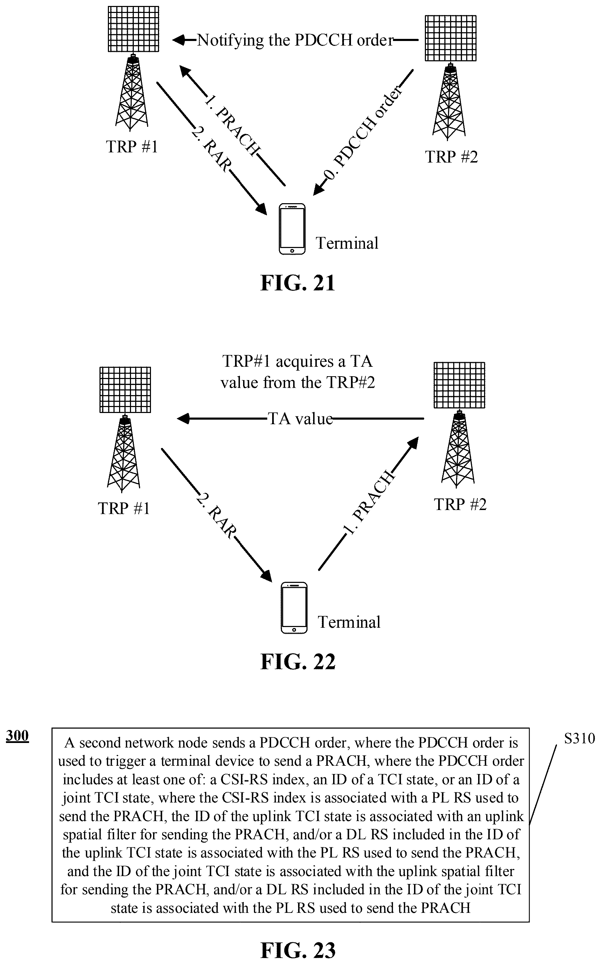

Specifically, for example, the flowchart of TA acquisition between multiple TRPs may be as illustrated in FIG. 21, the network device (e.g., the NW) sends the PDCCH order to the UE through the TRP#2 (step 0) to trigger the PRACH (step 2). The TRP#2 notifies the TRP#1 to receive the PRACH through a backhaul network. The TRP#1 performs uplink synchronization through measuring a PRACH preamble sequence on a RACH occasion, and calculates a TA value required to be adjusted by the UE. Then, the TA value is notified by the TRP#1 through the RAR (step 2).

It is to be noted that, since the NW sends the PDCCH order via the TRP#2, there is an advantage that TRP#1 may send the PDCCH order in time even if a downlink control channel is congested, so that the UE may achieve the uplink synchronization as early as possible.

In some embodiments, the DMRS of the PDCCH order may have no QCL relationship with a PL RS used to send the PRACH. Optionally, the PDCCH order may be received using a TCI state or a QCL assumption indicated by a control resource set where the PDCCH order is located. A CSI-RS index, an ID of an uplink TCI state or an ID of a joint TCI state used to send the PRACH indicated in the PDCCH order may have a different control resource set pool index from a control resource set where the PDCCH order is located.

In some embodiments, the DMRS of the PDCCH order may have no QCL relationship with the DMRS of the PDCCH for the RAR.

In some embodiments, the PDCCH order and the PDCCH for the RAR may be received using respective configured and/or activated TCI states of the PDCCH order and the PDCCH for the RAR, or the PDCCH order and the PDCCH for the RAR may be received using respective configured and/or activated QCL assumptions of the PDCCH order and the PDCCH for the RAR.

In some embodiments, the PDCCH order may be received using a TCI state or a QCL assumption indicated by a control resource set where a PDCCH corresponding to the PDCCH order is located, and/or the PDCCH for the RAR may be received using a TCI state or a QCL assumption indicated by a control resource set associated with a type 1 CSS associated with the RAR.

In some embodiments, a TCI state or a QCL assumption used to receive the PDCCH order may be different from a TCI state or QCL assumption used to receive the PDCCH carrying the RAR. That is to say, the terminal device does not expect that the PDCCH order and the PDCCH for the RAR are received using the same TCI state or QCL assumption.

In some embodiments, as illustrated in FIG. 21, between the step 1 and the step 2, there is no QCL relationship between the DMRS of the PDSCH for the RAR and the CSI-RS index for sending the PRACH indicated in the PDCCH order.

In some embodiments, the RAR and the PRACH may correspond to the same network node. Herein, a network node corresponding to the RAR and the PRACH may be configured with a first type 1 CSS. Optionally, the first type 1 CSS may be activated after the terminal device receives the PDCCH order, or the first type 1 CSS may be activated after the terminal device sends the PRACH.

In some embodiments, the first type 1 CSS may be deactivated after the terminal device receives the RAR.

In some embodiments, the network node corresponding to the PDCCH order may be different from the network node corresponding to the RAR and the PRACH.

In some embodiments, the network node corresponding to the PDCCH order may be configured with a second type 1 CSS. Optionally, the second type 1 CSS may be a regular type 1 CSS.

In some embodiments, the operation S210 may specifically include:

in a case where a TA timer of a first TAG expires, the terminal device sends the PRACH to a network node corresponding to the first TAG, where the network node corresponding to the first TAG is different from a network node corresponding to the RAR.

That is to say, in the embodiments of the present disclosure, the terminal device may be triggered, based on the TA timer, to send the PRACH.

In some embodiments, the network node corresponding to the RAR may be configured with the type 1 CSS, and the network node corresponding to the first TAG may be not configured with the type 1 CSS.

In some embodiments, the m TA command fields included in the RAR may indicate TA values from the network node receiving the PRACH. That is to say, the m TA command fields included in the RAR may be determined by the network node corresponding to the RAR based on TA values acquired from other network nodes.

In some embodiments, the DMRS of the PDSCH for the RAR may have no QCL relationship with the CSI-RS index, the ID of the uplink TCI state or the ID of the joint TCI state used to send the PRACH.

In some embodiments, the PDSCH for the RAR may be received using a TCI state or a QCL assumption indicated in a PDCCH for the RAR.

Specifically, for example, a flow of triggering the terminal device to send a PRACH based on the TA timer may be as illustrated in FIG. 22. In step 1, the terminal device sends the PRACH to the TRP#2; and in step 2, the terminal device receives an RAR sent by the TRP#1. When a TA timer of a certain TAG expires, the UE sends the PRACH to the TRP (the TRP is the TRP#2 in FIG. 22) corresponding to the TAG, and then, the NW estimates a TA value and sends the estimated TA value to the TRP#1 through a backhaul between TRPs, and the TRP#1 sends the RAR to the UE.

Therefore, in the embodiments of the present disclosure, the terminal device may determine TA values corresponding to m TAGs based on m TA command fields in an RAR, thereby acquiring the TA values in the uplink transmission scenarios of intra-cell multi-TRPs and inter-cell multi-TRPs, and optimizing the uplink transmission in the multi-TRP scenario.

The embodiments of the present disclosure solve the problem that a PDCCH order sent by the second network node conflicts with a QCL of the RAR sent by the first network node. Specifically, the terminal device uses an activated TCI state of the CORESET where the PDCCH order is located for receive beamforming to receive the PDCCH order, and receives a PDCCH and a PDSCH that are associated with the RAR using the activated TCI state of a CORESET associated with a type 1 CSS associated with the RAR..

The embodiments of the present disclosure solve the problem that a PRACH sent by the terminal device to the second network node conflicts with the QCL of the RAR sent by the first network node. The terminal device sends the PRACH using a CSI-RS index or an ID of a downlink TCI state or an ID of a joint TCI state indicated in the PDCCH order, and receives the PDCCH and the PDSCH that are associated with the RAR using the activated TCI state of the CORESET associated with the type 1 CSS associated with the RAR.

The embodiments of the present disclosure solve the problem that the PRACH sent by the terminal device to the second network node conflicts with the QCL of the RAR sent by the first network node. The terminal device sends the PRACH using the CSI-RS index or the ID of the downlink TCI state or the ID of the joint TCI state indicated in the PDCCH order, and the terminal device receives the PDCCH order using the activated TCI state of the CORESET where the PDCCH order is located for receive beamforming.

The embodiments of the terminal device and the first network node of the present disclosure have been described in detail above with reference to FIG. 7 to FIG. 22, and the embodiments of the second network node of the present disclosure are described in detail below with reference to FIG. 23. It is to be understood that the embodiments of the second network node correspond to the embodiments of the terminal device and the first network node, and similar descriptions of the embodiments of the second network node may refer to the embodiments of the terminal device and the first network node.

FIG. 23 is a schematic flowchart of a method 300 for wireless communication according to an embodiment of the present disclosure. As illustrated in FIG. 23, the method 300 for wireless communication may include at least some content of operation S310.

In operation S310, a second network node sends a PDCCH order, where the PDCCH order is used to trigger a terminal device to send a PRACH.

Herein, the PDCCH order may include at least one of: a CSI-RS index, an ID of a TCI state, or an ID of a joint TCI state.

Herein, the CSI-RS index may be associated with a PL RS used to send the PRACH.

Herein, the ID of the uplink TCI state may be associated with an uplink spatial filter for sending the PRACH, and/or a DL RS included in the ID of the uplink TCI state may be associated with the PL RS used to send the PRACH.

Herein, the ID of the joint TCI state may be associated with the uplink spatial filter for sending the PRACH, and/or a DL RS included in the ID of the joint TCI state may be associated with the PL RS used to send the PRACH.

It is to be understood that FIG. 23 illustrates steps or operations of the method 300 for wireless communication, but these steps or operations are merely examples, and other operations or modifications of various operations in FIG. 23 may be performed in the embodiment of the present disclosure.

In the embodiment of the present disclosure, the network node may also be referred to as a TRP or another device (such as a micro base station) having similar functions, which is not limited in the present disclosure.

In some embodiments, the embodiment of the present disclosure may be applied to inter-cell multiple network nodes (e.g., the inter-cell multi-TRPs), or the embodiment of the present disclosure may be applied to intra-cell multiple network nodes (e.g., the intra-cell multi-TRPs). Specifically, for example, the terminal device needs to respectively initiate random access channel procedures for different network nodes (e.g., the TRPs) to obtain TA values specific to the network nodes (e.g., TRP-specific TA values).

In some embodiments, the multiple network nodes may support an m-DCI TA acquisition procedure, i.e., each network node sends a message to the terminal device through DCI; and/or, the multiple network nodes may support an s-DCI TA acquisition procedure, i.e., the multiple network nodes may send messages to the terminal device through one piece of DCI.

For example, the MTRPs may support the M-DCI TA acquisition procedure, and in this case, there can be no better backhaul connection between the M-DCI MTRPs, and each TRP completes independent scheduling of the same UE. Each TRP may be identified with values "0" and "1" of the CORESETPoolIndex.

For example, the MTRPs may support a S-DCI TA acquisition procedure, and in this case, there can be better backhaul connections between the multiple MTRPs, and thus one TRP is supported to schedule uplink and downlink transmissions between the UE and two TRPs. However, the parameter CORESETPoolIndex is not configured, or the parameter CORESETPoolIndex can be only one value that is always set to be "0" or "1".

Specifically, the CSI-RS index in the PDCCH order is associated with a Path Loss (PL) Reference Signal (RS) used to send the PRACH. Since the CSI-RS is beamforming performed by the network for the UE, compared with the SSB, the CSI-RS has more accurate spatial directivity, and is of a UE-specific downlink reference signal. Therefore, the UE may also increase its uplink spatial directivity when sending the PRACH, thereby increasing the accuracy of the network detecting the PRACH.

Specifically, the ID of the uplink TCI state in the PDCCH order is associated with an uplink spatial filter (e.g., an uplink beam) for sending the PRACH, and/or a Downlink (DL) RS included in the ID of the uplink TCI state is associated with the PL RS used to send the PRACH. For the uplink TCI state, in addition to the characteristic of including the SSB index or the CSI-RS index, the uplink TCI state may directly include the PL RS, and the PL RS may be different from the SSB index or the CSI-RS index. Therefore, more flexible uplink beamforming and power control function can be provided.

In some embodiments, the embodiments of the present disclosure may be applied to a 4-step random access channel procedure or a 2-step random access channel procedure.

Specifically, the PDCCH order may be completed in DCI format 1_0. For example, when the DCI format 1_0 is scrambled by a Cell RNTI (C-RNTI) and a Frequency Domain Resource Assignment (FDRA) field has a value that is always set to be 1, the terminal device should understand the DCI as a PDCCH order. The network device (e.g., the NW) may provide some important parameters for the terminal device to send the PRACH, such as, a random access preamble index, an SSB index, a PRACH mask index (e.g., a RACH occasion (RO)). When the terminal device considers that the DCI is a PDCCH order, the terminal device may send the PRACH based on the following three pieces of indicated important information: the preamble index, the SSB index, and the PRACH mask index (indicating the RO associated with the SSB). The network device (e.g., the NW) may measure a correct TA value required by the terminal device through the preamble sent by the terminal device, and indicate the TA command to the terminal device through the RAR during the RACH procedure.

It is to be noted that the PL RS used to send the PRACH may be a CSI-RS index field in the PDCCH order, and the CSI-RS index is different from the SSB index (a cell-specific deployment) and may be used to achieve the terminal device (UE)-specific beamforming. Therefore, the PRACH transmission with more delicate spatial granularity can be provided.

Specifically, the uplink TCI state or the joint TCI state in the unified TCI state may be referred to by the UE for how to implement an uplink spatial transmit filter (beam) for the PRACH. In addition, the DL RS included in the uplink TCI state or the joint TCI state in the unified TCI state may be used as the PL RS for sending the PRACH. For the general flow of the unified TCI state, the network device (e.g., the NW) may configure a TCI state resource pool, such as including 128 TCI states, through the RRC signaling; then activates 8 TCI states or a combination thereof (including two joint TCI states or uplink TCI states) through an MAC CE; and finally notify the UE that the activated TCI state in which the MAC CE is indicated through a TCI state indication field, such as 3 bits, in the DCI.

An important power control parameters during the process of sending the PRACH is the PL RS, i.e., a reference signal for path loss measurement. The UE needs to measure a downlink path loss through the PL RS. For intra-cell multi-TRPs, the CSI-RS index, or a DL RS included in the ID of the uplink TCI state or the joint TCI state, indicated in the PDCCH order, may be used as the PL RS. The UE may estimate the path loss through the CSI-RS index of a local cell, or the DL RS in the ID of the uplink TCI state of the local cell or the joint TCI state of the local cell indicated by the PDCCH command, thereby adjusting the uplink transmit power.

For example, the PDCCH order may include: the CSI-RS index, the ID of the uplink TCI state, or the ID of the joint TCI state.

For another example, the PDCCH order may include: the CSI-RS index and the ID of the uplink TCI state.

For another example, the PDCCH order may include: the CSI-RS index and the ID of the joint TCI state.

For another example, the PDCCH order may include: the ID of the joint TCI state and the ID of the uplink TCI state.

For another example, the PDCCH order may include: the CSI-RS index, the ID of the joint TCI state and the ID of the uplink TCI state.

In some embodiments, different network nodes may be configured with different target receive power. Specifically, it is considered that different network nodes (e.g., TRPs) have different requirements for the power for receiving the PRACH, the network device (e.g., the NW) configures, for the terminal device, target receive power dedicated to the network node (e.g., the TRP), i.e., P_PRACH, target, f, c.

In some embodiments, different network nodes may be configured with different power ramping steps and/or power ramping counters. Specifically, after the terminal device sends the PRACH to the network node (e.g., the TRP), the terminal device may wait for receiving the RAR within a time window. If there is no RAR, the terminal device may perform repetition of the PRACH after the power ramping. For each of different network nodes (e.g., TRPs), the network device (e.g., the NW) should configure, for the terminal device, an independent power ramping step (including a high-priority random access channel procedure and a general-priority random access channel procedure) and an independent power ramping counter. The function of this counter is to stop ramping the power after the certain number of times of the power ramping, so as to avoid excessive transmit power, which causes interference.

In some embodiments, the PDCCH order may be associated with an activated PCI. That is to say, no information about the PCI is added into the PDCCH order, and the PDCCH order is limited to an additional PCI in an active state.

Specifically, for example, in the case where the present embodiments are applied to inter-cell multi network nodes (e.g., multi-TRPs), the PDCCH order is associated with an activated PCI. That is to say, no information about the PCI is added into the PDCCH order, and the PDCCH order is limited to the additional PCI in the active state.

In some embodiments, the PDCCH order may include n bits. The n bits indicate a PCI corresponding to the CSI-RS index, or the DL RS associated with the ID of the uplink TCI state or associated with the ID of the joint TCI state in the PDCCH order, or the n bits indicate a PCI index corresponding to the CSI-RS index, or the DL RS associated with the ID of the uplink TCI state or associated with the ID of the joint TCI state in the PDCCH order, where n is a positive integer.

Specifically, for example, in the case where the present embodiments are applied to inter-cell multi network nodes (e.g., multi-TRPs), the PDCCH order includes n bits. The n bits indicate a PCI corresponding to the CSI-RS index, or the DL RS associated with the ID of the uplink TCI state or associated with the ID of the joint TCI state in the PDCCH order, or the n bits indicate a PCI index corresponding to the CSI-RS index or the DL RS associated with the ID of the uplink TCI state or associated with the ID of the joint TCI state in the PDCCH order, where n is a positive integer.

In some embodiments, in the case where the n bits indicate the PCI index corresponding to the CSI-RS index or the DL RS associated with the ID of the uplink TCI state or associated with the ID of the joint TCI state in the PDCCH order, the PCI index may be obtained by performing further encoding based on multiple PCIs configured for the terminal device. For example, n = 3. Of course, in the embodiment, n may have another value, which is not limited in the embodiment.

In some embodiments, in a case where the n bits indicate the PCI corresponding to the CSI-RS index, or the DL RS associated with the ID of the uplink TCI state or associated with the ID of the joint TCI state in the PDCCH order, where n = 10. Of course, in the embodiment, n may have another value, which is not limited in the embodiment.

Specifically, for the inter-cell multi-TRPs, the PDCCH order should indicate which PCI the DL RS is from, in addition to indicating the SSB index or the CSI-RS index. Therefore, it is necessary to directly add a PCI of 10 bits or a PCI index of 3 bits into the PDCCH order. It is to be noted herein that the PCI index is re-encoding performed on the up to 7 PCIs that is already configured for the UE, thus, the PCI index of 3 bits is sufficient, the purpose of which is to reduce overhead.

In some embodiments, the PDCCH order may include one bit, where a value of the one bit indicates that the PDCCH order is associated with an activated PCI, or the value of the one bit indicates that the PDCCH order is associated with a PCI of a serving cell.

Specifically, for example, in the case where the embodiment is applied to inter-cell multi network nodes (e.g., multi-TRPs), the PDCCH order includes one bit, and a value of the one bit indicates that the PDCCH order is associated with the activated PCI, or the value of the one bit indicates that the PDCCH order is associated with the PCI of the serving cell. For example, the one bit having a value of 0 indicates that the PDCCH order is associated with the activated PCI, and the one bit having a value of 1 indicates that the PDCCH order is associated with the PCI of the serving cell. For another example, the one bit having the value of 1 indicates that the PDCCH order is associated with the activated PCI, and the one bit having the value of 0 indicates that the PDCCH order is associated with the PCI of the serving cell.

It is to be noted that the activated PCI may also be referred to as the additional PCI.

In some embodiments, the RAR corresponding to the PRACH may be received by the terminal device from the first network node, and the PRACH may be sent by the terminal device to the first network node. That is to say, the RAR corresponding to the PRACH corresponds to the first network node, and the PDCCH order and the PRACH correspond to the second network node. Herein, the first network node may be configured with the type 1 CSS and the second network node may be not configured with the type 1 CSS.

In some embodiments, the DMRS of the PDCCH order may have no QCL relationship with the DMRS of the PDCCH for the RAR.

In some embodiments, the PDCCH order and the PDCCH for the RAR may be received using respective configured and/or activated TCI states of the PDCCH order and the PDCCH for the RAR, or the PDCCH order and the PDCCH for the RAR may be received using respective configured and/or activated QCL assumptions of the PDCCH order and the PDCCH for the RAR.

In some embodiments, the PDCCH order may be received using a TCI state or a QCL assumption indicated by a control resource set where a PDCCH corresponding to the PDCCH order is located, and/or the PDCCH for the RAR may be received using a TCI state or a QCL assumption indicated by a control resource set associated with a type 1 CSS associated with the RAR.

In some embodiments, a TCI state or a QCL assumption used to receive the PDCCH order may be different from a TCI state or QCL assumption used to receive the PDCCH for the RAR.

In some embodiments, the DMRS of the PDSCH for the RAR may have no QCL relationship with the CSI-RS index or the ID of the uplink TCI state or the ID of the joint TCI state used to send the PRACH indicated in the PDCCH order.

In some embodiments, the PDSCH for the RAR may be received using a TCI state or a QCL assumption indicated in a PDCCH for the RAR.

In some embodiments, the RAR corresponding to the PRACH may be received by the terminal device from the first network node, and the PRACH may be sent by the terminal device to the first network node. That is to say, the RAR corresponding to the PRACH and the PRACH correspond to the first network node.

Herein, the first network node may be configured with the type 1 CSS and the second network node may be not configured with the type 1 CSS.

In some embodiments, the DMRS of the PDCCH order may have no QCL relationship with the PL RS used to send the PRACH. Optionally, the PDCCH order may be received using the TCI state or the QCL assumption indicated by a control resource set where the PDCCH order is located, and the CSI-RS index, the ID of the uplink TCI state or the ID of the joint TCI state used to send the PRACH indicated in the PDCCH order has a different control resource set pool index from the control resource set where the PDCCH order is located.

In some embodiments, the RAR corresponding to the PRACH may be received by the terminal device from the first network node, and the PRACH may be sent by the terminal device to the first network node. That is to say, the RAR corresponding to the PRACH and the PRACH correspond to the first network node.

Herein, the first network node may be configured with the first type 1 CSS, and the first type 1 CSS may be activated after the terminal device receives the PDCCH order, or the first type 1 CSS may be activated after the terminal device sends the PRACH.

In some embodiments, the first type 1 CSS may be deactivated after the terminal device receives the RAR.

In some embodiments, the second network node may be configured with the second type 1 CSS.

Therefore, in the embodiment of the present disclosure, the terminal device may determine the PL RS used to send the PRACH and/or the uplink spatial filter for sending the PRACH based on at least one of: the CSI-RS index, the ID of the TCI state, or the ID of the joint TCI state included in the PDCCH order, thereby optimizing the transmission of the PRACH.

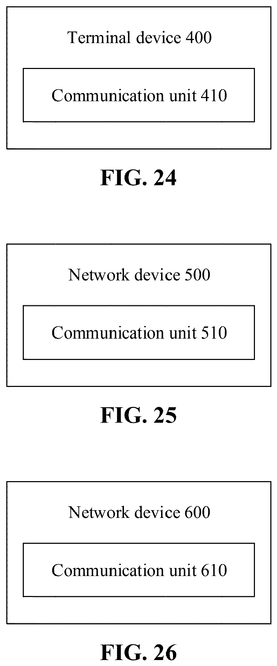

The method embodiments of the present disclosure have been described in detail above with reference to FIG. 7 to FIG. 23, and the device embodiments of the present disclosure are described in detail below with reference to FIG. 24 to FIG. 29. It is to be understood that the device embodiments correspond to the method embodiments, and similar descriptions of the device embodiments may refer to the method embodiments.

FIG. 24 is a schematic block diagram of a terminal device 400 according to an embodiment of the present disclosure. As illustrated in FIG. 24, the terminal device 400 includes a communication unit 410.

The communication unit 410 is configured to send a PRACH.

The communication unit 410 is further configured to receive an RAR, where the RAR includes m TA command fields, and the m TA command fields respectively indicate TA values corresponding to m TAGs, where m is a positive integer, and m = 1 or m ≥ 2.

In some embodiments, the RAR may include m TA information groups, where each of the m TA information groups includes a TA command field and a TAG identity field, and a TAG identity field in an i-th TA information group indicates a TAG corresponding to a TA value indicated by a TA command field in the i-th TA information group, where i is a positive integer, and 1 ≤ i ≤ m.

In some embodiments, the RAR may include a first information field.

Herein, the first information field indicates a type of the RAR.

In some embodiments, the type of the RAR may include at least one of:

an RAR for acquiring only a TA value;
an RAR for acquiring only a TA value and a TAG identity;
an RAR for acquiring only a TA value and an uplink grant;
an RAR for acquiring only a TA value, a TAG identity, and an uplink grant; or
an RAR for a random access channel procedure.

In some embodiments, the communication unit 410 may be further configured to terminate the random access channel procedure after receiving the RAR for acquiring only a TA value; or, the communication unit 410 is further configured to terminate the random access channel procedure after receiving the RAR for acquiring only a TA value and a TAG identity.

In some embodiments, the first information field may occupy one bit.

In some embodiments, the first information field may occupy two bits.

In some embodiments, before the terminal device sends the PRACH, the communication unit 410 may be further configured to receive a PDCCH order, where the PDCCH order is used to trigger the terminal device to send the PRACH.

In some embodiments, the PDCCH order may include at least one of: a CSI-RS index, an ID of an uplink TCI state,

or an ID of a joint TCI state.

Herein, the CSI-RS index may be associated with a PL RS used to send the PRACH.

Herein, the ID of the uplink TCI state may be associated with an uplink spatial filter for sending the PRACH, and/or a DL RS included in the ID of the uplink TCI state may be associated with the PL RS used to send the PRACH.

Herein, the ID of the joint TCI state may be associated with the uplink spatial filter for sending the PRACH, and/or a DL RS included in the ID of the joint TCI state may be associated with the PL RS used to send the PRACH.

In some embodiments, the RAR may be received by the terminal device from the first network node, the PDCCH order may be received by the terminal device from the second network node, and the PRACH may be sent by the terminal device to the second network node.

Herein, the first network node may be configured with a type1 CSS, and the second network node may be not configured with the type 1 CSS.

In some embodiments, both the PDCCH order and the RAR may be received by the terminal device from the first network node, and the PRACH may be sent by the terminal device to the second network node.

Herein, the first network node may be configured with a type 1 CSS and the second network node may be not configured with the type 1 CSS.

In some embodiments, the m TA command fields included in the RAR may indicate TA values from the second network node.

In some embodiments, the RAR may be received by the terminal device from the first network node, the PRACH may be sent by the terminal device to the first network node, and the PDCCH order may be received by the terminal device from the second network node.

Herein, the first network node may be configured with a type 1 CSS and the second network node may be not configured with the type 1 CSS.

In some embodiments, the DMRS of the PDCCH order may have no QCL relationship with the DMRS of the PDCCH for the RAR.

In some embodiments, the PDCCH order and the PDCCH for the RAR may be received using respective configured and/or activated TCI states of the PDCCH order and the PDCCH for the RAR, or the PDCCH order and the PDCCH for the RAR may be received using respective configured and/or activated QCL assumptions of the PDCCH order and the PDCCH for the RAR.

In some embodiments, the PDCCH order may be received using a TCI state or a QCL assumption indicated by a control resource set where a PDCCH corresponding to the PDCCH order is located, and/or the PDCCH for the RAR may be received using a TCI state or a QCL assumption indicated by a control resource set associated with a type 1 CSS associated with the RAR.

In some embodiments, a TCI state or a QCL assumption used to receive the PDCCH order may be different from a TCI state or QCL assumption used to receive the PDCCH for the RAR.

In some embodiments, a DMRS of a PDSCH for the RAR may have no QCL relationship with a CSI-RS index or an uplink TCI state or a joint TCI state used to send the PRACH indicated in the PDCCH order.

In some embodiments, the PDSCH for the RAR may be received using a TCI state or a QCL assumption indicated in a PDCCH for the RAR.

In some embodiments, the DMRS of the PDCCH order may have no QCL relationship with a PL RS used to send the PRACH.

In some embodiments, the PDCCH order may be received using a TCI state or a QCL assumption indicated by a control resource set where the PDCCH order is located, and a CSI-RS index, an ID of an uplink TCI state or an ID of a joint TCI state used to send the PRACH indicated in the PDCCH order may have a different control resource set pool index from a control resource set where the PDCCH order is located.

In some embodiments, the RAR may be received by the terminal device from the first network node, and the PRACH may be sent by the terminal device to the first network node.

Herein, the first network node may be configured with the first type 1 CSS.

In some embodiments, the first type 1 CSS may be activated after the terminal device receives the PDCCH order, or the first type 1 CSS may be activated after the terminal device sends the PRACH.

In some embodiments, the first type 1 CSS may be deactivated after the terminal device receives the RAR.

In some embodiments, the PDCCH order may be received by the terminal device from the second network node.

In some embodiments, the second network node may be configured with a second type 1 CSS.

In some embodiments, the PDCCH order may be associated with an activated PCI.

In some embodiments, the PDCCH order may include n bits.

Herein, the n bits indicate a PCI corresponding to a CSI-RS index, or a DL RS associated with an ID of an uplink TCI state or associated with an ID of a joint TCI state in the PDCCH order, or the n bits indicate a PCI index corresponding to a CSI-RS index or a DL RS associated with an ID of an uplink TCI state or associated with an ID of a joint TCI state in the PDCCH order, where n is a positive integer.

In some embodiments, in a case where the n bits indicate the PCI index corresponding to the CSI-RS index, or the DL RS associated with the ID of the uplink TCI state or associated with the ID of the joint TCI state in the PDCCH order, the PCI index may be obtained by performing further encoding based on multiple PCIs configured for the terminal device.

In some implementations, n=3.

In some embodiments, in a case where the n bits indicate the PCI corresponding to the CSI-RS index, or the DL RS associated with the ID of the uplink TCI state or associated with the ID of the joint TCI state in the PDCCH order, n = 10.

In some embodiments, the PDCCH order may include one bit, where a value of the one bit indicates that the PDCCH order is associated with an activated PCI, or a value of the one bit indicates that the PDCCH order is associated with a PCI of a serving cell.

In some embodiments, the communication unit 410 may be specifically configured to:
in a case where a TA timer of a first TAG expires, send the PRACH to a network node corresponding to the first TAG, where the network node corresponding to the first TAG is different from a network node corresponding to the RAR.

In some embodiments, the network node corresponding to the RAR may be configured with a type 1 CSS, and the network node corresponding to the first TAG may be not configured with the type 1 CSS.

In some embodiments, the m TA command fields included in the RAR may indicate TA values from a network node receiving the PRACH.

In some embodiments, a DMRS of a PDSCH for the RAR may have no QCL relationship with a CSI-RS index, an ID of an uplink TCI state or an ID of a joint TCI state used to send the PRACH.

In some embodiments, the PDSCH for the RAR may be received using a TCI state or a QCL assumption indicated in a PDCCH for the RAR.

In some embodiments, different network nodes may be configured with different target receive powers; and/or different network nodes may be configured with different steps of power ramping and/or counters of power ramping.

In some embodiments, the communication unit may be a communication interface or a transceiver or an input-output interface of a communication chip or a system-on-chip. The processing unit may be one or more processors.

It is to be understood that the terminal device 400 in the embodiments of the present disclosure may correspond to the terminal device in the method embodiments of the present disclosure, and the above and other operations and/or functions of the units in the terminal device 400 are intended to implement the corresponding flow of the terminal device in the method 200 illustrated in FIG. 7. For brevity, details are not elaborated herein again.

FIG. 25 is a schematic block diagram of a network device 500 according to an embodiment of the present disclosure. The network device 500 is a first network node, and as illustrated in FIG. 25, the network device 500 includes a communication unit 510.

The communication unit is configured to send an RAR, where the RAR includes m TA command fields, and the m TA command fields respectively indicate TA values corresponding to m TAGs, where m is a positive integer, and m = 1 or m $\geq$ 2.

In some embodiments, the RAR may include m TA information groups, where each of the m TA information groups includes a TA command field and a TAG identity field, and a TAG identity field in an i-th TA information group indicates a TAG corresponding to a TA value indicated by a TA command field in the i-th TA information group, where i is a positive integer, and $1 \leq i \leq m$.

In some embodiments, the RAR may include a first information field.

Herein, the first information field may indicate a type of the RAR.

In some embodiments, the type of the RAR may include at least one of:

an RAR for acquiring only a TA value;
an RAR for acquiring only a TA value and a TAG identity;
an RAR for acquiring only a TA value and an uplink grant;
an RAR for acquiring only a TA value, a TAG identity, and an uplink grant; or
an RAR for a random access channel procedure.

In some embodiments, the first information field may occupy one bit.

In some embodiments, the first information field may occupy two bits.

In some embodiments, the PRACH corresponding to the RAR may be triggered to be sent by a PDCCH order.

In some embodiments, the PDCCH order may include at least one of: a CSI-RS index, an ID of an uplink TCI state, or an ID of a joint TCI state.

Herein, the CSI-RS index may be associated with a PL RS used to send the PRACH.

Herein, the ID of the uplink TCI state may be associated with an uplink spatial filter for sending the PRACH, and/or a DL RS included in the ID of the uplink TCI state may be associated with the PL RS used to send the PRACH.

Herein, the ID of the joint TCI state may be associated with the uplink spatial filter for sending the PRACH, and/or a DL RS included in the ID of the joint TCI state may be associated with the PL RS used to send the PRACH.

In some embodiments, the PDCCH order may be sent by a second network node to a terminal device, and the PRACH may be sent by the terminal device to the second network node.

Herein, the first network node may be configured with a type1 CSS, and the second network node may be not configured with the type 1 CSS.

In some embodiments, both the RAR and the PDCCH order may be sent by the first network node to a terminal device, and the PRACH may be sent by the terminal device to the second network node.

Herein, the first network node may be configured with a type 1 CSS and the second network node may be not configured with the type 1 CSS.

In some embodiments, the m TA command fields included in the RAR may indicate TA values from the second network node.

In some embodiments, the PRACH may be sent by a terminal device to the first network node, and the PDCCH order may be sent by a second network node to the terminal device,

Herein, the first network node may be configured with a type 1 CSS and the second network node may be not configured with the type 1 CSS.

In some embodiments, the DMRS of the PDCCH order may have no QCL relationship with the DMRS of the PDCCH for the RAR.

In some embodiments, the PDCCH order and the PDCCH for the RAR may be received using respective configured and/or activated TCI states of the PDCCH order and the PDCCH for the RAR, or the PDCCH order and the PDCCH for the RAR may be received using respective configured and/or activated QCL assumptions of the PDCCH order and the PDCCH for the RAR.

In some embodiments, the PDCCH order may be received using a TCI state or a QCL assumption indicated by a control resource set where a PDCCH corresponding to the PDCCH order is located, and/or the PDCCH for the RAR may be received using a TCI state or a QCL assumption indicated by a control resource set associated with a type 1 CSS associated with the RAR.

In some embodiments, a TCI state or a QCL assumption used to receive the PDCCH order may be different from a TCI state or QCL assumption used to receive the PDCCH for the RAR.

In some embodiments, a DMRS of a PDSCH for the RAR may have no QCL relationship with a CSI-RS index or an ID of an uplink TCI state or an ID of a joint TCI state used to send the PRACH indicated in the PDCCH order.

In some embodiments, the PDSCH for the RAR may be received using a TCI state or a QCL assumption indicated in a PDCCH for the RAR.

In some embodiments, the DMRS of the PDCCH order may have no QCL relationship with a PL RS used to send the PRACH.

In some embodiments, the PDCCH order may be received using a TCI state or a QCL assumption indicated by a control resource set where the PDCCH order is located, and a CSI-RS index, an ID of an uplink TCI state or an ID of a joint TCI state used to send the PRACH indicated in the PDCCH order may have a different control resource set pool index from a control resource set where the PDCCH order is located.

In some embodiments, the PRACH may be sent by a terminal device to the first network node.

Herein, the first network node may be configured with the first type 1 CSS.

In some embodiments, the first type 1 CSS may be activated after the terminal device receives the PDCCH order, or the first type 1 CSS may be activated after the terminal device sends the PRACH.

In some embodiments, the first type 1 CSS may be deactivated after the terminal device receives the RAR.

In some embodiments, the PDCCH order may be received by the terminal device from the second network node.

In some embodiments, the second network node may be configured with a second type 1 CSS.

In some embodiments, the PDCCH order may be associated with an activated PCI.

In some embodiments, the PDCCH order may include n bits.

Herein, the n bits indicate a PCI corresponding to a CSI-RS index, a DL RS associated with an ID of an uplink TCI state or an ID of a joint TCI state in the PDCCH order, or the n bits indicate a PCI index corresponding to a CSI-RS index, or a DL RS associated with an ID of an uplink TCI state or associated with an ID of a joint TCI state in the PDCCH order, where n is a positive integer.

In some embodiments, in the case where the n bits indicate the PCI index corresponding to the CSI-RS index, or the DL RS associated with the ID of the uplink TCI state or associated with the ID of the joint TCI state in the PDCCH order, the PCI index may be obtained by performing further encoding based on multiple PCIs configured for the terminal device.

In some implementations, n=3.

In some embodiments, in a case where the n bits indicate the PCI corresponding to the CSI-RS index, or the DL RS associated with the ID of the uplink TCI state or associated with the ID of the joint TCI state in the PDCCH order, n = 10.

In some embodiments, the PDCCH order may include one bit, where a value of the one bit indicates that the PDCCH order is associated with an activated PCI, or a value of the one bit indicates that the PDCCH order is associated with a PCI of a serving cell.

In some embodiments, in a case where a TA timer of a first TAG expires, the PRACH corresponding to the RAR may be sent to a network node corresponding to the first TAG, where the network node corresponding to the first TAG is different from the first network node.

In some embodiments, the first network node may be configured with a type 1 CSS, and the network node corresponding to the first TAG may be not configured with the type 1 CSS.

In some embodiments, the m TA command fields included in the RAR may indicate TA values from a network node receiving the first TAG.

In some embodiments, a DMRS of a PDSCH for the RAR may have no QCL relationship with a CSI-RS index, an ID of an uplink TCI state or an ID of a joint TCI state used to send the PRACH.

In some embodiments, the PDSCH for the RAR may be received using a TCI state or a QCL assumption indicated in a PDCCH for the RAR.

In some embodiments, different network nodes may be configured with different target receive powers; and/or different network nodes may be configured with different steps of power ramping and/or counters of power ramping.

In some embodiments, the communication unit may be a communication interface or a transceiver or an input-output interface of a communication chip or a system-on-chip. The processing unit may be one or more processors.

It is to be understood that the network device 500 in the embodiments of the present disclosure may correspond to the first network node in the method embodiments of the present disclosure, and the above and other operations and/or functions of the units in the network device 500 are intended to implement the corresponding flow of the first network node in the method 200 illustrated in FIG. 7. For brevity, details are not elaborated herein again.

FIG. 26 is a schematic block diagram of a network device 600 according to an embodiment of the present disclosure. The network device 600 is a second network node, and as illustrated in FIG. 26, the network device 600 includes a communication unit 610.

The communication unit 610 is configured to send a PDCCH order, where the PDCCH order is used to trigger the terminal device to send the PRACH.

The PDCCH order may include at least one of: a CSI-RS index, an ID of an uplink TCI state, or an ID of a joint TCI state;

Herein, the CSI-RS index may be associated with a PL RS used to send the PRACH.

Herein, the ID of the uplink TCI state may be associated with an uplink spatial filter for sending the PRACH, and/or a DL RS included in the ID of the uplink TCI state may be associated with the PL RS used to send the PRACH.

Herein, the ID of the joint TCI state may be associated with the uplink spatial filter for sending the PRACH, and/or a DL RS included in the ID of the joint TCI state may be associated with the PL RS used to send the PRACH.

In some embodiments, a Random Access Response (RAR) corresponding to the PRACH may be received by the terminal device from a first network node, and the PRACH may be sent by the terminal device to the second network node.

Herein, the first network node may be configured with a type1 CSS, and the second network node may be not configured with the type 1 CSS.

In some embodiments, an RAR corresponding to the PRACH may be received by the terminal device from a first network node, and the PRACH may be sent by the terminal device to a first network node.

Herein, the first network node may be configured with a type 1 CSS and the second network node may be not configured with the type 1 CSS.

In some embodiments, the DMRS of the PDCCH order may have no QCL relationship with the DMRS of the PDCCH for the RAR.

In some embodiments, the PDCCH order and the PDCCH for the RAR may be received using respective configured and/or activated TCI states of the PDCCH order and the PDCCH for the RAR, or the PDCCH order and the PDCCH for the RAR may be received using respective configured and/or activated QCL assumptions of the PDCCH order and the PDCCH for the RAR.

In some embodiments, the PDCCH order may be received using a TCI state or a QCL assumption indicated by a control resource set where a PDCCH corresponding to the PDCCH order is located, and/or the PDCCH for the RAR may be received using a TCI state or a QCL assumption indicated by a control resource set associated with a type 1 CSS associated with the RAR.

In some embodiments, a TCI state or a QCL assumption used to receive the PDCCH order may be different from a TCI state or QCL assumption used to receive the PDCCH for the RAR.

In some embodiments, a DMRS of a Physical Downlink Shared Channel (PDSCH) for the RAR may have no QCL relationship with a CSI-RS index or an ID of an uplink TCI state or an ID of a joint TCI state used to send the PRACH indicated in the PDCCH order.

In some embodiments, the PDSCH for the RAR may be received using a TCI state or a QCL assumption indicated in a PDCCH for the RAR.

In some embodiments, the DMRS of the PDCCH order may have no QCL relationship with a PL RS used to send the PRACH.

In some embodiments, the PDCCH order may be received using a TCI state or a QCL assumption indicated by a control resource set where the PDCCH order is located, and a CSI-RS index, an ID of an uplink TCI state or an ID of a joint TCI state used to send the PRACH indicated in the PDCCH order may have a different control resource set pool index from a control resource set where the PDCCH order is located.

In some embodiments, an RAR corresponding to the PRACH may be received by the terminal device from a first network node, and the PRACH is sent by the terminal device to a first network node. Herein, the first network node may be configured with a first type 1 CSS, the first type 1 CSS may be activated after the terminal device receives the PDCCH order, or the first type 1 CSS may be activated after the terminal device sends the PRACH.

In some embodiments, the first type 1 CSS may be deactivated after the terminal device receives the RAR.

In some embodiments, the second network node may be configured with a second type 1 CSS.

In some embodiments, the PDCCH order may be associated with an activated PCI.

In some embodiments, the PDCCH order may include n bits.

Herein, the n bits indicate a PCI corresponding to a CSI-RS index, or a DL RS associated with an ID of an uplink TCI state or associated with an ID of a joint TCI state in the PDCCH order, or the n bits indicate a PCI index corresponding to a CSI-RS index, or a DL RS associated with an ID of an uplink TCI state or associated with an ID of a joint TCI state in the PDCCH order, where n is a positive integer.

In some embodiments, in the case where the n bits indicate the PCI index corresponding to the CSI-RS index, or the DL RS associated with the ID of the uplink TCI state or associated with the ID of the joint TCI state in the PDCCH order, the PCI index may be obtained by performing further encoding based on multiple PCIs configured for the terminal device.

In some implementations, n=3.

In some embodiments, in a case where the n bits indicate the PCI corresponding to the CSI-RS index, or the DL RS associated with the ID of the uplink TCI state or associated with the ID of the joint TCI state in the PDCCH order, n = 10.

In some embodiments, the PDCCH order may include one bit, where a value of the one bit indicates that the PDCCH order is associated with an activated PCI, or a value of the one bit indicates that the PDCCH order is associated with a PCI of a serving cell.

In some embodiments, different network nodes may be configured with different target receive powers, and/or different network nodes may be configured with different steps of power ramping and/or counters of power ramping.

In some embodiments, the communication unit may be a communication interface or a transceiver or an input-output interface of a communication chip or a system-on-chip. The processing unit may be one or more processors.

It is to be understood that the network device 600 in the embodiments of the present disclosure may correspond to the second network node in the method embodiments of the present disclosure, and the above and other operations and/or functions of the units in the network device 600 are intended to implement the corresponding flow of the second network node in the method 300 illustrated in FIG. 23. For brevity, details are not elaborated herein again.

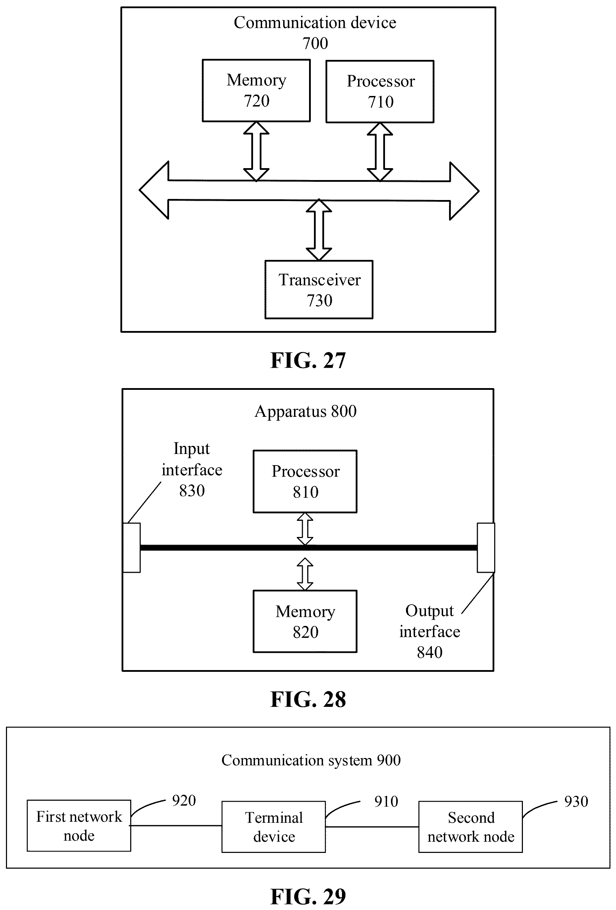

FIG. 27 is a schematic structural diagram of a communication device 700 according to an embodiment of the present disclosure. The communication device 700 illustrated in FIG. 27 includes a processor 710. The processor 710 may be configured to invoke and execute a computer program stored in a memory to perform each of the methods according to the embodiments of the present disclosure.

Optionally, as illustrated in FIG. 27, the communication device 700 may further include a memory 720. Herein, the processor 710 may be configured to invoke and execute the computer program stored in the memory 720 to perform each of the methods according to the embodiments of the present disclosure.

Herein, the memory 720 may be a separate device independent of the processor 710, or may be integrated into the processor 710.

In some embodiments, as illustrated in FIG. 27, the communication device 700 may further include a transceiver 730. The processor 710 may control the transceiver 730 to communicate with other devices. Specifically, the transceiver 730 may transmit information or data to other devices, or receive information or data from other devices.

Herein, the transceiver 730 may include a transmitter and a receiver. The transceiver 730 may further include one or more antennas.

In some embodiments, the processor 710 may implement functions of the processing unit in the terminal device, or the processor 710 may implement functions of the processing unit in the network device (the first network node and/or the second network node). For brevity, details are not elaborated herein again.

In some embodiments, the transceiver 730 may implement functions of the communication unit in the terminal device. For brevity, details are not elaborated herein again.

In some embodiments, the transceiver 730 may implement functions of the communication unit in the network device (the first network node and/or the second network node). For brevity, details are not elaborated herein again.

In some embodiments, the communication device 700 may specifically be the network device (the first network node and/or the second network node) in the embodiments of the present disclosure. The communication device 700 may implement corresponding processes that are implemented by the network device (the first network node and/or the second network node) in each of the methods in the embodiments of the present disclosure. For brevity, details are not elaborated herein again.

Optionally, the communication device 700 may specifically be the terminal device in the embodiments of the present disclosure. The communication device 700 may implement corresponding processes that are implemented by the terminal device in each of the methods in the embodiments of the present disclosure. For brevity, details are not elaborated herein again.

FIG. 28 is a schematic structural diagram of an apparatus according to an embodiment of the present disclosure. The apparatus 800 illustrated in FIG. 28 includes a processor 810. The processor 810 may be configured to invoke and execute a computer program stored in a memory to perform each of the methods according to the embodiments of the present disclosure.

Optionally, as illustrated in FIG. 28, the apparatus 800 may further include a memory 820. Herein, the processor 810 may be configured to invoke and execute the computer program stored in the memory 820 to perform each of the methods according to the embodiments of the present disclosure.

Herein, the memory 820 may be a separate device independent of the processor 810, or may be integrated into the processor 810.

In some embodiments, the processor 810 may implement functions of the processing unit in the terminal device, or the processor 810 may implement functions of the processing unit in the network device (the first network node and/or the second network node). For brevity, details are not elaborated herein again.

In some embodiments, the apparatus 800 may further include an input interface 830. Herein, the processor 810 may control the input interface 830 to communicate with other devices or chips. Specifically, the input interface 830 may obtain information or data from other devices or chips. Optionally, the processor 810 may be located on-chip or off-chip.

In some embodiments, the input interface 830 may implement functions of the communication unit in the terminal device, or the input interface 830 may implement functions of the communication unit in the network device (the first network node and/or the second network node).

In some embodiments, the apparatus 800 may further include an output interface 840. Herein, the processor 810 may control the output interface 840 to communicate with other devices or chips. Specifically, the output interface 840 may output information or data to other devices or chips. Optionally, the processor 810 may be located on-chip or off-chip.

In some embodiments, the output interface 840 may implement functions of the communication unit in the terminal device, or the output interface 840 may implement functions of the communication unit in the network device.

In some embodiments, the apparatus may be applied to the network device (the first network node and/or the second network node) in the embodiments of the present disclosure. The apparatus may implement corresponding processes that are implemented by the network device (the first network node and/or the second network node) in each of the methods in the embodiments of the present disclosure. For brevity, details are not elaborated herein again.

In some embodiments, the apparatus may be applied to the terminal device in the embodiments of the present disclosure. The apparatus may implement corresponding processes that are implemented by the terminal device in each of the methods in the embodiments of the present disclosure. For brevity, details are not elaborated herein again.

In some embodiments, the apparatus mentioned in the embodiments of the present disclosure may also be a chip. For example, the chip referred to in the embodiments of the present disclosure may also be referred to as a system-level chip, a system chip, a chip system, or a system-on-chip, etc.

FIG. 29 is a schematic block diagram of a communication system 900 according to an embodiment of the present disclosure. As illustrated in FIG. 29, the communication system 900 includes a terminal device 910, a first network node 920, and a second network node 930.

Herein, the terminal device 910 may be configured to implement the corresponding functions implemented by the terminal device in the foregoing methods. The first network node 920 may be configured to implement the corresponding functions implemented by the first network node in the foregoing methods. The second network node 930 may be configured to implement the corresponding functions implemented by the second network node in the foregoing methods. For brevity, details are not elaborated herein again.

It is to be understood that the processor of the embodiments of the disclosure may be an integrated circuit chip with signal processing capacity. In an implementation process, various steps of the above method embodiments may be completed by integrated logic circuits of hardware in the processor or instructions in the form of software. The above processor may be a general-purpose processor, a Digital Signal Processor (DSP), an ASIC, a Field Programmable Gate Array (FPGA), or other programmable logic devices, discrete gate or transistor logic devices, and discrete hardware components. Various methods, steps, and logical block diagrams disclosed in the embodiments of the disclosure may be implemented or performed. The general-purpose processor may be a microprocessor, any conventional processor, or the like. Steps of the methods disclosed with reference to the embodiments of the disclosure may be directly performed and accomplished by a hardware decoding processor, or may be performed and accomplished by a combination of hardware and software modules in the decoding processor. The software modules may be located in a storage medium mature in the art, such as a random access memory, a flash memory, a read-only memory, a programmable read-only memory or electrically erasable programmable memory, or a register. The storage medium is located in the memory, and the processor reads information in the memory and completes the steps in the foregoing methods in combination with hardware of the processor.

It is to be understood that the memory in the embodiments of the disclosure may be a volatile memory or a non-volatile memory, or may include a volatile memory and a non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM), which is used as an external high-speed cache. By way of example but not restrictive description, many forms of RAMs may be used, for example, a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It is to be noted that the memory of the systems and methods described in this specification includes but is not limited to these and any other proper types of memories.

It is to be understood that the abovementioned memories are exemplary but not restrictive, for example, the memory in the embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM). That is to say, the memories described in the embodiment of the disclosure are intended to include, but not limited to, these and any other suitable types of memories.

An embodiment of the present disclosure further provides a computer-readable storage medium configured to store a computer program.

In some embodiments, the computer-readable storage medium may be applied to the network device (the first network node and/or the second network node) in the embodiments of the present disclosure, and the computer program causes a computer to perform the corresponding processes performed by the network device (the first network node and/or the second network node) in various methods of the embodiments of the present disclosure. For brevity, details are not elaborated herein again.

In some embodiments, the computer-readable storage medium may be applied to the terminal device in the embodiments of the present disclosure, and the computer program causes a computer to perform the corresponding processes performed by the terminal device in various methods of the embodiments of the present disclosure. For brevity, details are not described herein again.

An embodiment of the present disclosure further provides a computer program product, which includes computer program instructions.

In some embodiments, the computer program product may be applied to the network device (the first network node and/or the second network node) in the embodiments of the present disclosure, and the computer program instructions cause a computer to perform the corresponding processes performed by the network device (the first network node and/or the second network node) in various methods of the embodiments of the present disclosure. For brevity, details are not elaborated herein again.

In some embodiments, the computer program product may be applied to the terminal device in the embodiments of the present disclosure, and the computer program instructions cause a computer to perform the corresponding processes performed by the terminal device in various methods of the embodiments of the present disclosure. For brevity, details are not described herein again.

An embodiment of the present disclosure further provides a computer program.

In some embodiments, the computer program may be applied to the network device (the first network node and/or the second network node) in the embodiments of the present disclosure, and the computer program, when is run on a computer, causes the computer to perform the corresponding processes performed by the network device (the first network node and/or the second network node) in various methods of the embodiments of the present disclosure. For brevity, details are not elaborated herein again.

In some embodiments, the computer program may be applied to the terminal device in the embodiments of the present disclosure, and the computer program, when is run on a computer, causes the computer to perform the corresponding processes performed by the terminal device in various methods of the embodiments of the present disclosure. For brevity, details are not described herein again.

Those of ordinary skill in the art may realize that units and algorithm steps of various examples described in combination with the embodiments disclosed herein may be implemented by electronic hardware, or a combination of computer software and electronic hardware. Whether the functions are executed in a hardware or software manner depends on specific applications and design constraints of the technical solutions. Professionals may implement the described functions for each specific application by using different methods, but such implementations shall not be regarded as outside the scope of the present disclosure.

It may be clearly understood by those skilled in the art that, for the specific working processes of the aforementioned systems, apparatuses and units, reference may be made to the corresponding processes in the aforementioned method embodiments, and such specific working processes of the systems, devices and units are not described herein again for the purpose of convenient and brief description

In the several embodiments provided in the disclosure, it is to be understood that the disclosed system, apparatus, and methods may be implemented in other modes. For example, the apparatus embodiments described above are only schematic, and for example, division of the units is only logic function division, and other division manners may be adopted during practical implementation. For example, multiple units or components may be combined or integrated into another system, or some characteristics may be neglected or not executed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separated, and the components displayed as units may or may not be physical units, and may be located in one place or may be distributed over multiple network units. Some or all of the units may be selected according to actual needs to achieve the objectives of the solutions of the embodiments.

In addition, functional units in various embodiments of the disclosure may be integrated into one processing unit, or each of the units may be physically separated, or two or more units may be integrated into one unit.

When the functions are realized in a form of software functional units and sold or used as an independent product, they may be stored in a computer-readable storage medium. For this understanding, the technical solutions of the embodiments of the disclosure essentially or the parts that contribute to the prior art, or part of the technical solutions can be embodied in the form of a software product. The computer software product is stored in a storage medium, including multiple instructions for causing a computer device (which may be a personal computer, a server, or a network device, and the like) to execute all or part of the steps of the method described in the embodiments of the disclosure. The foregoing storage medium includes a USB flash disk, a mobile hard disk drive, an ROM, an RAM, and various media that can store program codes, such as a magnetic disk or an optical disk.

The above descriptions are merely specific implementations of the disclosure, but are not intended to limit the scope of protection of the disclosure. Any variation or replacement readily figured out by a person skilled in the art within the technical scope disclosed in the disclosure shall fall within the scope of protection of the disclosure. Therefore, the scope of protection of the disclosure is defined by the scope of protection of the claims.

**Claims**

1. A method for wireless communication, comprising:

   sending, by a terminal device, a Physical Random Access Channel (PRACH); and
   receiving, by the terminal device, a Random Access Response (RAR), wherein the RAR comprises m Timing Advance (TA) command fields, and the m TA command fields respectively indicate TA values corresponding to m Timing Advance Groups (TAGs), where m is a positive integer, and m = 1 or m ≥ 2.

2. The method of claim 1, wherein
   the RAR comprises m TA information groups, wherein each of the m TA information groups comprises a TA command field and a TAG identity field, and a TAG identity field in an i-th TA information group indicates a TAG corresponding to a TA value indicated by a TA command field in the i-th TA information group, where i is a positive integer, and 1 ≤ i ≤ m.

3. The method of claim 1 or 2, wherein the RAR comprises a first information field, wherein the first information field indicates a type of the RAR.

4. The method of claim 3, wherein the type of the RAR comprises at least one of:

   an RAR for acquiring only a TA value;
   an RAR for acquiring only a TA value and a TAG identity;
   an RAR for acquiring only a TA value and an uplink grant;
   an RAR for acquiring only a TA value, a TAG identity, and an uplink grant; or
   an RAR for a random access channel procedure.

5. The method of claim 4, further comprising:

   terminating, by the terminal device, the random access channel procedure after receiving the RAR for acquiring only a TA value; or
   terminating, by the terminal device, the random access channel procedure after receiving the RAR for acquiring only a TA value and a TAG identity.

6. The method of any one of claims 3 to 5, wherein the first information field occupies one bit.

7. The method of any one of claims 3 to 5, wherein the first information field occupies two bits.

8. The method of any one of claims 1 to 7, wherein before sending, by the terminal device, the PRACH, the method further comprises:
receiving, by the terminal device, a Physical Downlink Control Channel (PDCCH) order, wherein the PDCCH order is used to trigger the terminal device to send the PRACH.

9. The method of claim 8, wherein the PDCCH order comprises at least one of: a Channel State Information Reference Signal (CSI-RS) index, an Identity (ID) of an uplink Transmission Configuration Indicator (TCI) state, or an ID of a joint TCI state,

wherein the CSI-RS index is associated with a Path Loss (PL) Reference Signal (RS) used to send the PRACH, the ID of the uplink TCI state is associated with an uplink spatial filter for sending the PRACH, and/or a Downlink (DL) RS comprised in the ID of the uplink TCI state is associated with the PL RS used to send the PRACH, and the ID of the joint TCI state is associated with the uplink spatial filter for sending the PRACH, and/or a DL RS comprised in the ID of the joint TCI state is associated with the PL RS used to send the PRACH.

10. The method of claim 8 or 9, wherein the RAR is received by the terminal device from a first network node, the PDCCH order is received by the terminal device from a second network node, and the PRACH is sent by the terminal device to the second network node,
wherein the first network node is configured with a type1 Common Search Space (CSS), and the second network node is not configured with the type 1 CSS.

11. The method of claim 8 or 9, wherein

the PDCCH order and the RAR are received by the terminal device from a first network node, and the PRACH is sent by the terminal device to a second network node,
wherein the first network node is configured with a type 1 CSS and the second network node is not configured with the type 1 CSS.

12. The method of claim 10 or 11, wherein the m TA command fields comprised in the RAR indicate TA values from the second network node.

13. The method of claim 8 or 9, wherein the RAR is received by the terminal device from a first network node, the PRACH is sent by the terminal device to the first network node, and the PDCCH order is received by the terminal device from a second network node,
wherein the first network node is configured with a type 1 CSS and the second network node is not configured with the type 1 CSS.

14. The method of claim 10 or 13, wherein a Demodulation Reference Signal (DMRS) of the PDCCH order has no Quasi-co-located (QCL) relationship with a DMRS of a PDCCH carrying the RAR.

15. The method of claim 14, wherein the PDCCH order and the PDCCH for the RAR are received using respective configured and/or activated TCI states of the PDCCH order and the PDCCH for the RAR, or the PDCCH order and the PDCCH for the RAR are received using respective configured and/or activated QCL assumptions of the PDCCH order and the PDCCH for the RAR.

16. The method of claim 15, wherein
the PDCCH order is received using a TCI state or a QCL assumption indicated by a control resource set where a PDCCH corresponding to the PDCCH order is located, and/or the PDCCH for the RAR is received using a TCI state or a QCL assumption indicated by a control resource set associated with a type 1 CSS associated with the RAR.

17. The method of any one of claims 14 to 16, wherein a TCI state or a QCL assumption used to receive the PDCCH order is different from a TCI state or QCL assumption used to receive the PDCCH for the RAR.

18. The method of any one of claims 10 to 12, wherein a DMRS of a Physical Downlink Shared Channel (PDSCH) for the RAR has no QCL relationship with a CSI-RS index or an uplink TCI state or a joint TCI state used to send the PRACH indicated in the PDCCH order.

19. The method of claim 18, wherein the PDSCH for the RAR is received using a TCI state or a QCL assumption indicated in a PDCCH carrying the RAR.

20. The method of claim 11 or 13, wherein
the DMRS of the PDCCH order has no QCL relationship with a PL RS used to send the PRACH.

21. The method of claim 20, wherein the PDCCH order is received using a TCI state or a QCL assumption indicated by a control resource set where the PDCCH order is located,
wherein a CSI-RS index, an ID of an uplink TCI state or an ID of a joint TCI state used to send the PRACH indicated in the PDCCH order has a different control resource set pool index from a control resource set where the PDCCH order is located.

22. The method of claim 8 or 9, wherein the RAR is received by the terminal device from a first network node, and the PRACH is sent by the terminal device to the first network node,
wherein the first network node is configured with a first type 1 CSS.

23. The method of claim 22, wherein

the first type 1 CSS is activated after the terminal device receives the PDCCH order, or
the first type 1 CSS is activated after the terminal device sends the PRACH.

24. The method of claim 22 or 23, wherein the first type 1 CSS is deactivated after the terminal device receives the RAR.

25. The method of any one of claims 22 to 24, wherein the PDCCH order is received by the terminal device from a second network node.

26. The method of claim 25, wherein the second network node is configured with a second type 1 CSS.

27. The method of any one of claims 8 to 26, wherein the PDCCH order is associated with an activated Physical Cell Identifier (PCI).

28. The method of any one of claims 8 to 26, wherein the PDCCH order comprises n bits,
wherein the n bits indicate a PCI corresponding to a CSI-RS index, or a DL RS associated with an ID of an uplink TCI state or associated with an ID of a joint TCI state in the PDCCH order, or the n bits indicate a PCI index corresponding to a CSI-RS index, or a DL RS associated with an ID of an uplink TCI state or associated with an ID of a joint TCI state in the PDCCH order, where n is a positive integer.

29. The method of claim 28, wherein
in a case where the n bits indicate the PCI index corresponding to the CSI-RS index, or the DL RS associated with the ID of the uplink TCI state or associated with the ID of the joint TCI state in the PDCCH order, the PCI index is obtained by performing further encoding based on a plurality of PCIs configured for the terminal device.

30. The method of claim 29, wherein n = 3.

31. The method of claim 28, wherein
in a case where the n bits indicate the PCI corresponding to the CSI-RS index, or the DL RS associated with the ID of the uplink TCI state or associated with the ID of the joint TCI state in the PDCCH order, n = 10.

32. The method of any one of claims 8 to 26, wherein the PDCCH order comprises one bit, wherein a value of the one bit indicates that the PDCCH order is associated with an activated PCI, or a value of the one bit indicates that the PDCCH order is associated with a PCI of a serving cell.

33. The method of any one of claims 1 to 7, wherein sending, by the terminal device, the PRACH comprises:
in a case where a TA timer of a first TAG expires, sending, by the terminal device, the PRACH to a network node corresponding to the first TAG, wherein the network node corresponding to the first TAG is different from a network node corresponding to the RAR.

34. The method of claim 33, wherein
the network node corresponding to the RAR is configured with a type 1 CSS, and the network node corresponding to the first TAG is not configured with the type 1 CSS.

35. The method of claim 33 or 34, wherein the m TA command fields comprised in the RAR indicate TA values from a network node receiving the PRACH.

36. The method of any one of claims 33 to 35, wherein
a DMRS of a PDSCH for the RAR has no QCL relationship with a CSI-RS index, an ID of an uplink TCI state or an ID of a joint TCI state used to send the PRACH.

37. The method of claim 36, wherein the PDSCH for the RAR is received using a TCI state or a QCL assumption indicated in a PDCCH carrying the RAR.

38. A method for wireless communication, comprising:
sending, by a first network node, a Random Access Response (RAR), wherein the RAR comprises m Timing Advance (TA) command fields, and the m TA command fields respectively indicate TA values corresponding to m Timing Advance Groups (TAGs), where m is a positive integer, and m = 1 or m ≥ 2.

39. The method of claim 38, wherein
the RAR comprises m TA information groups, wherein each of the m TA information groups comprises a TA command field and a TAG identity field, and a TAG identity field in an i-th TA information group indicates a TAG corresponding to a TA value indicated by a TA command field in the i-th TA information group, where i is a positive integer, and 1 ≤ i ≤ m.

40. The method of claim 38 or 39, wherein the RAR comprises a first information field, wherein the first information field indicates a type of the RAR.

41. The method of claim 40, wherein the type of the RAR comprises at least one of:

an RAR for acquiring only a TA value;
an RAR for acquiring only a TA value and a TAG identity;
an RAR for acquiring only a TA value and an uplink grant;
an RAR for acquiring only a TA value, a TAG identity, and an uplink grant; or
an RAR for a random access channel procedure.

42. The method of claim 40 or 41, wherein the first information field occupies one bit.

43. The method of claim 40 or 41, wherein the first information field occupies two bits.

44. The method of any one of claims 38 to 43, wherein
a Physical Random Access Channel (PRACH) corresponding to the RAR is triggered to be sent by a Physical Downlink Control Channel (PDCCH) order.

45. The method of claim 44, wherein the PDCCH order comprises at least one of: a Channel State Information Reference Signal (CSI-RS) index, an Identity (ID) of an uplink Transmission Configuration Indicator (TCI) state, or an ID of a joint TCI state,

wherein the CSI-RS index is associated with a Path Loss (PL) Reference Signal (RS) used to send the PRACH, the ID of the uplink TCI state is associated with an uplink spatial filter for sending the PRACH, and/or a Downlink (DL) RS comprised in the ID of the uplink TCI state is associated with the PL RS used to send the PRACH, and the ID of the joint TCI state is associated with the uplink spatial filter for sending the PRACH, and/or a DL RS comprised in the ID of the joint TCI state is associated with the PL RS used to send the PRACH.

46. The method of claim 44 or 45, wherein

the PDCCH order is sent by a second network node to a terminal device, and the PRACH is sent by the terminal device to the second network node,
wherein the first network node is configured with a type1 Common Search Space (CSS), and the second network node is not configured with the type 1 CSS.

47. The method of claim 44 or 45, wherein

the RAR and the PDCCH order are sent by the first network node to a terminal device, and the PRACH is sent by the terminal device to a second network node,
wherein the first network node is configured with a type 1 CSS and the second network node is not configured with the type 1 CSS.

48. The method of claim 46 or 47, wherein the m TA command fields comprised in the RAR indicate TA values from the second network node.

49. The method of claim 44 or 45, wherein

the PRACH is sent by a terminal device to the first network node, and the PDCCH order is sent by a second network node to the terminal device,
wherein the first network node is configured with a type 1 CSS and the second network node is not configured with the type 1 CSS.

50. The method of claim 46 or 49, wherein a Demodulation Reference Signal (DMRS) of the PDCCH order has no Quasi-co-located (QCL) relationship with a DMRS of a PDCCH for the RAR.

51. The method of claim 50, wherein the PDCCH order and the PDCCH for the RAR are received using respective configured and/or activated TCI states of the PDCCH order and the PDCCH for the RAR, or the PDCCH order and the PDCCH for the RAR are received using respective configured and/or activated QCL assumptions of the PDCCH order and the PDCCH for the RAR.

52. The method of claim 51, wherein
the PDCCH order is received using a TCI state or a QCL assumption indicated by a control resource set where a PDCCH corresponding to the PDCCH order is located, and/or the PDCCH for the RAR is received using a TCI state or a QCL assumption indicated by a control resource set associated with a type 1 CSS associated with the RAR.

53. The method of any one of claims 50 to 52, wherein a TCI state or a QCL assumption used to receive the PDCCH order is different from a TCI state or QCL assumption used to receive the PDCCH for the RAR.

54. The method of any one of claims 46 to 48, wherein a DMRS of a Physical Downlink Shared Channel (PDSCH) for the RAR has no QCL relationship with a CSI-RS index or an ID of an uplink TCI state or an ID of a joint TCI state used to send the PRACH indicated in the PDCCH order.

55. The method of claim 54, wherein the PDSCH for the RAR is received using a TCI state or a QCL assumption indicated in a PDCCH for the RAR.

56. The method of claim 47 or 49, wherein
the DMRS of the PDCCH order has no QCL relationship with a PL RS used to send the PRACH.

57. The method of claim 56, wherein

the PDCCH order is received using a TCI state or a QCL assumption indicated by a control resource set where the PDCCH order is located, and
a CSI-RS index, an ID of an uplink TCI state or an ID of a joint TCI state used to send the PRACH indicated in the PDCCH order has a different control resource set pool index from a control resource set where the PDCCH order is located.

58. The method of claim 44 or 45, wherein

the PRACH is sent by a terminal device to the first network node,
wherein the first network node is configured with a first type 1 CSS.

59. The method of claim 58, wherein
the first type 1 CSS is activated after the terminal device receives the PDCCH order, or the first type 1 CSS is activated after the terminal device sends the PRACH.

60. The method of claim 58 or 59, wherein the first type 1 CSS is deactivated after the terminal device receives the RAR.

61. The method of any one of claims 58 to 60, wherein the PDCCH order is received by the terminal device from a second network node.

62. The method of claim 61, wherein the second network node is configured with a second type 1 CSS.

63. The method of any one of claims 44 to 62, wherein the PDCCH order is associated with an active Physical Cell Identifier (PCI).

64. The method of any one of claims 44 to 62, wherein the PDCCH order comprises n bits,
wherein the n bits indicate a PCI corresponding to a CSI-RS index, or a DL RS associated with an ID of an uplink TCI state or associated with an ID of a joint TCI state in the PDCCH order, or the n bits indicate a PCI index corresponding to a CSI-RS index, or a DL RS associated with an ID of an uplink TCI state or associated with an ID of a joint TCI state in the PDCCH order, where n is a positive integer.

65. The method of claim 64, wherein
in a case where the n bits indicate the PCI index corresponding to the CSI-RS index, or the DL RS associated with the ID of the uplink TCI state or associated with the ID of the joint TCI state in the PDCCH order, the PCI index is obtained by performing further encoding based on a plurality of PCIs configured for the terminal device.

66. The method of claim 65, wherein n = 3.

67. The method of claim 64, wherein
in a case where the n bits indicate the PCI corresponding to the CSI-RS index, or the DL RS associated with the ID of the uplink TCI state or associated with the ID of the joint TCI state in the PDCCH order, n = 10.

68. The method of any one of claims 44 to 62, wherein the PDCCH order comprises one bit, wherein a value of the one bit indicates that the PDCCH order is associated with an activated PCI, or a value of the one bit indicates that the PDCCH order is associated with a PCI of a serving cell.

69. The method of any one of claims 38 to 43, wherein
in a case where a TA timer of a first TAG expires, the PRACH corresponding to the RAR is sent to a network node corresponding to the first TAG, wherein the network node corresponding to the first TAG is different from the first network node.

70. The method of claim 69, wherein
the first network node is configured with a type 1 CSS, and the network node corresponding to the first TAG is not configured with the type 1 CSS.

71. The method of claim 69 or 70, wherein the m TA command fields comprised in the RAR indicate TA values from a network node receiving the first TAG.

72. The method of any one of claims 69 to 71, wherein
a DMRS of a PDSCH for the RAR has no QCL relationship with a CSI-RS index, an ID of an uplink TCI state or an ID of a joint TCI state used to send the PRACH.

73. The method of claim 72, wherein the PDSCH for the RAR is received using a TCI state or a QCL assumption indicated in a PDCCH for the RAR.

74. The method of any one of claims 38 to 73, wherein

different network nodes are configured with different target receive powers; and/or
different network nodes are configured with different steps of power ramping and/or counters of power ramping.

75. A method for wireless communication, comprising:

sending, by a second network node, a Physical Downlink Control Channel (PDCCH) order, wherein the PDCCH order is used to trigger a terminal device to send a Physical Random Access Channel (PRACH),
wherein the PDCCH order comprises at least one of: a Channel State Information Reference Signal (CSI-RS) index, an Identity (ID) of an uplink Transmission Configuration Indicator (TCI) state, or an ID of a joint TCI state, wherein the CSI-RS index is associated with a Path Loss (PL) Reference Signal (RS) used to send the PRACH, the ID of the uplink TCI state is associated with an uplink spatial filter for sending the PRACH, and/or a Downlink (DL) RS comprised in the ID of the uplink TCI state is associated with the PL RS used to send the PRACH, and the ID of the joint TCI state is associated with the uplink spatial filter for sending the PRACH, and/or a DL RS comprised in the ID of the joint TCI state is associated with the PL RS used to send the PRACH.

76. The method of claim 75, wherein

a Random Access Response (RAR) corresponding to the PRACH is received by the terminal device from a first network node, and the PRACH is sent by the terminal device to the second network node, wherein the first network node is configured with a type1 Common Search Space (CSS), and the second network node is not configured with the type 1 CSS.

77. The method of claim 75, wherein

an RAR corresponding to the PRACH is received by the terminal device from a first network node, and the PRACH is sent by the terminal device to a first network node, wherein the first network node is configured with a type 1 CSS and the second network node is not configured with the type 1 CSS.

78. The method of claim 76, wherein a Demodulation Reference Signal (DMRS) of the PDCCH order has no Quasi-co-located (QCL) relationship with a DMRS of a PDCCH for the RAR.

79. The method of claim 78, wherein the PDCCH order and the PDCCH for the RAR are received using respective configured and/or activated TCI states of the PDCCH order and the PDCCH for the RAR, or the PDCCH order and the PDCCH for the RAR are received using respective configured and/or activated QCL assumptions of the PDCCH order and the PDCCH for the RAR.

80. The method of claim 79, wherein
the PDCCH order is received using a TCI state or a QCL assumption indicated by a control resource set where a PDCCH corresponding to the PDCCH order is located, and/or the PDCCH for the RAR is received using a TCI state or a QCL assumption indicated by a control resource set associated with a type 1 CSS associated with the RAR.

81. The method of any one of claims 78 to 80, wherein a TCI state or a QCL assumption used to receive the PDCCH order is different from a TCI state or QCL assumption used to receive the PDCCH for the RAR.

82. The method of claim 76, wherein a DMRS of a Physical Downlink Shared Channel (PDSCH) for the RAR has no QCL relationship with a CSI-RS index or an ID of an uplink TCI state or an ID of a joint TCI state used to send the PRACH indicated in the PDCCH order.

83. The method of claim 82, wherein the PDSCH for the RAR is received using a TCI state or a QCL assumption indicated in a PDCCH for the RAR.

84. The method of claim 77, wherein
the DMRS of the PDCCH order has no QCL relationship with a PL RS used to send the PRACH.

85. The method of claim 84, wherein

the PDCCH order is received using a TCI state or a QCL assumption indicated by a control resource set where the PDCCH order is located, and
a CSI-RS index, an ID of an uplink TCI state or an ID of a joint TCI state used to send the PRACH indicated in the PDCCH order has a different control resource set pool index from a control resource set where the PDCCH order is located.

86. The method of claim 75, wherein an RAR corresponding to the PRACH is received by the terminal device from a first network node, and the PRACH is sent by the terminal device to the first network node, wherein the first network node is configured with a first type 1 CSS,
wherein the first type 1 CSS is activated after the terminal device receives the PDCCH order, or the first type 1 CSS is activated after the terminal device sends the PRACH.

87. The method of claim 86, wherein the first type 1 CSS is deactivated after the terminal device receives the RAR.

88. The method of claim 86 or 87, wherein the second network node is configured with a second type 1 CSS.

89. The method of any one of claims 75 to 88, wherein the PDCCH order is associated with an active Physical Cell Identifier (PCI).

90. The method of any one of claims 75 to 88, wherein the PDCCH order comprises n bits,
wherein the n bits indicate a PCI corresponding to a CSI-RS index, or a DL RS associated with an ID of an uplink TCI state or associated with an ID of a joint TCI state in the PDCCH order, or the n bits indicate a PCI index corresponding to a CSI-RS index, or a DL RS associated with an ID of an uplink TCI state or associated with an ID of a joint TCI state in the PDCCH order, where n is a positive integer.

91. The method of claim 90, wherein
in a case where the n bits indicate the PCI index corresponding to the CSI-RS index, or the DL RS associated with the ID of the uplink TCI state or associated with the ID of the joint TCI state in the PDCCH order, the PCI index is obtained by performing further encoding based on a plurality of PCIs configured for the terminal device.

92. The method of claim 91, wherein n = 3.

93. The method of claim 90, wherein
in a case where the n bits indicate the PCI corresponding to the CSI-RS index, or the DL RS associated with the ID of the uplink TCI state or associated with the ID of the joint TCI state in the PDCCH order, n = 10.

94. The method of any one of claims 75 to 90, wherein the PDCCH order comprises one bit, wherein a value of the one bit indicates that the PDCCH order is associated with an activated PCI, or a value of the one bit indicates that the PDCCH order is associated with a PCI of a serving cell.

95. The method of any one of claims 75 to 94, wherein

different network nodes are configured with different target receive powers; and/or
different network nodes are configured with different steps of power ramping and/or counters of power ramping.

96. A terminal device, comprising:

a communication unit, configured to send a Physical Random Access Channel (PRACH),
wherein the communication unit is further configured to receive a Random Access Response (RAR), wherein the RAR comprises m Timing Advance (TA) command fields, and the m TA command fields respectively indicate TA values corresponding to m Timing Advance Groups (TAGs), where m is a positive integer, and m = 1 or m ≥ 2.

97. A network device, wherein the network device is a first network node and comprises:
a communication unit, configured to send a Random Access Response (RAR), wherein the RAR comprises m Timing Advance (TA) command fields, and the m TA command fields respectively indicate TA values corresponding to m Timing Advance Groups (TAGs), where m is a positive integer, and m = 1 or m ≥ 2.

98. A network device, wherein the network device is a second network node and comprises:

a communication unit, configured to send a Physical Downlink Control Channel (PDCCH) order, wherein the PDCCH order is used to trigger a terminal device to send a Physical Random Access Channel (PRACH), wherein the PDCCH order comprises at least one of: a Channel State Information Reference Signal (CSI-RS) index, an Identity (ID) of an uplink Transmission Configuration Indicator (TCI) state, or an ID of a joint TCI state, wherein the CSI-RS index is associated with a Path Loss (PL) Reference Signal (RS) used to send the PRACH, the ID of the uplink TCI state is associated with an uplink spatial filter for sending the PRACH, and/or a Downlink (DL) RS comprised in the ID of the uplink TCI state is associated with the PL RS used to send the PRACH, and the ID of the joint TCI state is associated with the uplink spatial filter for sending the PRACH, and/or a DL RS comprised in the ID of the joint TCI state is associated with the PL RS used to send the PRACH.

99. A terminal device comprising: a processor and a memory, wherein the memory is configured to store a computer program and the processor is configured to invoke and execute the computer program stored in the memory, to enable the terminal device to perform the method of any one of claims 1 to 37.

100.
A network device, wherein the network device is a first network node and comprises: a processor and a memory, wherein the memory is configured to store a computer program and the processor is configured to invoke and execute the computer program stored in the memory, to enable the network device to perform the method of any one of claims 38 to 74.

101.
A network device, wherein the network device is a second network node and comprises: a processor and a memory, wherein the memory is configured to store a computer program and the processor is configured to invoke and execute the computer program stored in the memory, to enable the network device to perform the method of any one of claims 75 to 95.

102.
A base station, wherein the base station has a first network node and/or a second network node;

wherein the first network node comprises: a processor and a memory, wherein the memory is configured to store a computer program and the processor is configured to invoke and execute the computer program stored in the memory, to enable the first network device to perform the method of any one of claims 38 to 74.
wherein the second network node comprises: a processor and a memory, wherein the memory is configured to store a computer program and the processor is configured to invoke and execute the computer program stored in the memory, to enable the second network device to perform the method of any one of claims 75 to 95.

103.
A chip comprising: a processor configured to invoke and execute a computer program from a memory, to cause a device on which the chip is mounted to perform the method of any one of claims 1 to 37.

104.
A chip comprising: a processor configured to invoke and execute a computer program from a memory, to cause a device on which the chip is mounted to perform the method of any one of claims 38 to 74.

105.
A chip comprising: a processor configured to invoke and execute a computer program from a memory, to cause a device on which the chip is mounted to perform the method of any one of claims 75 to 95.

106.
A computer storage medium configured to store a computer program which, when run, executes the method of any one of claims 1 to 37, or the method of any one of claims 38 to 74, or the method of any one of claims 75 to 95.

107.
A computer program, when run, executing the method of any one of claims 1 to 37, or the method of any one of claims 38 to 74, or the method of any one of claims 75 to 95.

**100**

**FIG. 1**

| TAG ID | TA command | Byte 1 |
|--------|------------|--------|

**FIG. 2**

| R | R | R | R | TA command | Byte 1 |
|---|---|---|---|------------|--------|
| TA command | | | | | Byte 2 |

**FIG. 3**

| | | |
|---|---|---|
| R | TA command | Byte 1 |
| TA command | UL grant | Byte 2 |
| UL grant | | Byte 3 |
| UL grant | | Byte 4 |
| UL grant | | Byte 5 |
| Temporary C-RNTI | | Byte 6 |
| Temporary C-RNTI | | Byte 7 |

**FIG. 4**

| Downlink frame $i$ |
|---|

| Uplink frame $i$ |
|---|

$(N_{TA}+N_{TA,offset})T_C$

**FIG. 5**

Control
resource set
pool index 0

Control
resource set
pool index 1

PDCCH 1
PDSCH 1
PUSCH 1

PDCCH 2
PDSCH 2
PUSCH 2

TRP 1

TRP 2

UE

**FIG. 6**

200

| Terminal device | | First network node | | Second network node |

S210,A terminal device
sends a PRACH

S210,A terminal device
sends a PRACH

S220,A first network node sends
a RAR, where the RAR includes
m TA command fields, and the m
TA command fields respectively
indicate TA values corresponding
to m TAGs, where m is a positive
integer, and m = 1 or m ≥ 2

Information interaction

S230,The terminal
device receives the
RAR

**FIG. 7**

| | TA command | | | Byte 1 |
|---|---|---|---|---|
| R | TA command | | | Byte 1 |
| TA command | | TAG identity | R | Byte 2 |
| UL grant | | | | Byte 3 |
| UL grant | | | | Byte 4 |
| UL grant | | | | Byte 5 |
| Temporary C-RNTI | | | | Byte 6 |
| Temporary C-RNTI | | | | Byte 7 |

**FIG. 8**

| R | TA command | | | | | | | Byte 1 |
| TA command | | | | | TAG identity | R | | Byte 2 |

**FIG. 9**

| R | TA command 0 | | | | | | | Byte 1 |
| TA command 0 | | | | | TAG identity 0 | R | | Byte 2 |
| R | TA command 1 | | | | | | | Byte 3 |
| TA command 1 | | | | | TAG identity 1 | R | | Byte 4 |
| UL grant | | | | | | | | Byte 5 |
| Temporary C-RNTI | | | | | | | | Byte 6 |
| Temporary C-RNTI | | | | | | | | Byte 7 |

**FIG. 10**

| R | TA command 0 | | | | | | | Byte 1 |
| TA command 0 | | | | | TAG identity 0 | R | | Byte 2 |
| R | TA command 1 | | | | | | | Byte 3 |
| TA command 1 | | | | | TAG identity 1 | R | | Byte 4 |

**FIG. 11**

| | | |
|---|---|---|
| F | TA command | Byte 1 |
| TA command | TAG identity | R | Byte 2 |
| UL grant | | Byte 3 |
| UL grant | | Byte 4 |
| UL grant | | Byte 5 |
| Temporary C-RNTI | | Byte 6 |
| Temporary C-RNTI | | Byte 7 |

**FIG. 12**

| | | |
|---|---|---|
| F | TA command | Byte 1 |
| TA command | TAG identity | R | Byte 2 |

**FIG. 13**

| | | |
|---|---|---|
| F | TA command 0 | Byte 1 |
| TA command 0 | TAG identity 0 | R | Byte 2 |
| R | TA command 1 | Byte 3 |
| TA command 1 | TAG identity 1 | R | Byte 4 |
| UL grant | | Byte 5 |
| Temporary C-RNTI | | Byte 6 |
| Temporary C-RNTI | | Byte 7 |

**FIG. 14**

| | | | | | | | |
|---|---|---|---|---|---|---|---|
| F | TA command 0 | | | | | | Byte 1 |
| TA command 0 | | | TAG identity 0 | | R | | Byte 2 |
| R | TA command 1 | | | | | | Byte 3 |
| TA command 1 | | | TAG identity 1 | | R | | Byte 4 |

## FIG. 15

| | | | | | | | |
|---|---|---|---|---|---|---|---|
| F | TA command | | | | | | Byte 1 |
| TA command | | | TAG identity | | R | | Byte 2 |
| UL grant | | | | | | | Byte 3 |
| UL grant | | | | | | | Byte 4 |
| UL grant | | | | | | | Byte 5 |

## FIG. 16

| | | | | | | | |
|---|---|---|---|---|---|---|---|
| R | TA command 0 | | | | | | Byte 1 |
| TA command 0 | | | TAG identity 0 | | R | | Byte 2 |
| R | TA command 1 | | | | | | Byte 3 |
| TA command 1 | | | TAG identity 1 | | R | | Byte 4 |
| UL grant | | | | | | | Byte 5 |
| UL grant | | | | | | | Byte 6 |
| UL grant | | | | | | | Byte 7 |

## FIG. 17

| F | TA command | Byte 1 |
|---|---|---|
| TA command | | TAG identity | Byte 2 |

**FIG. 18**

TRP#1 acquires a TA value
from the TRP#2

TRP #1     Terminal     TRP #2

TA value

2. RAR    1. PRACH    0. PDCCH order

**FIG. 19**

TRP#1 acquires a TA
value from the TRP#2

TRP #1     Terminal     TRP #2

TA value

0. PDCCH order    2. RAR    1. PRACH

**FIG. 20**

←Notifying the PDCCH order—

TRP #1

TRP #2

Terminal

FIG. 21

TRP#1 acquires a TA value from the TRP#2

—TA value—

TRP #1

TRP #2

Terminal

FIG. 22

**300**

A second network node sends a PDCCH order, where the PDCCH order is used to trigger a terminal device to send a PRACH, where the PDCCH order includes at least one of: a CSI-RS index, an ID of a TCI state, or an ID of a joint TCI state, where the CSI-RS index is associated with a PL RS used to send the PRACH, the ID of the uplink TCI state is associated with an uplink spatial filter for sending the PRACH, and/or a DL RS included in the ID of the uplink TCI state is associated with the PL RS used to send the PRACH, and the ID of the joint TCI state is associated with the uplink spatial filter for sending the PRACH, and/or a DL RS included in the ID of the joint TCI state is associated with the PL RS used to send the PRACH

S310

FIG. 23

Terminal device 400

Communication unit 410

**FIG. 24**

Network device 500

Communication unit 510

**FIG. 25**

Network device 600

Communication unit 610

**FIG. 26**

Communication device
700

Memory
720

Processor
710

Transceiver
730

**FIG. 27**

Apparatus 800

Input
interface
830

Processor
810

Memory
820

Output
interface
840

**FIG. 28**

Communication system 900

First network
node

920

Terminal
device

910

Second
network node

930

**FIG. 29**

## INTERNATIONAL SEARCH REPORT

| | International application No. |
|---|---|
| | **PCT/CN2023/094024** |

| A. | CLASSIFICATION OF SUBJECT MATTER |
|---|---|

H04W72/0446(2023.01)i

According to International Patent Classification (IPC) or to both national classification and IPC

| B. | FIELDS SEARCHED |
|---|---|

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNTXT; ENTXT; VEN; DWPI; 3GPP: 多发送接收点, 小区内, 小区间, 定时提前, 下行, 上行, 物理随机接入信道, 随机接入响应, 定时提前组, TA命令, 冲突, intra-cell, inter-cell, multi-TRP, TA, timing advance, TAG, PRACH, RAR, TA command, conflict+

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2022220108 A1 (NTT DOCOMO INC.) 20 October 2022 (2022-10-20) entire document | 1-107 |
| A | CN 102892192 A (ZTE CORP.) 23 January 2013 (2013-01-23) entire document | 1-107 |
| A | CN 110475358 A (HUAWEI TECHNOLOGIES CO., LTD.) 19 November 2019 (2019-11-19) entire document | 1-107 |
| A | CN 113169848 A (GUANGDONG OPPO MOBILE COMMUNICATIONS CO., LTD.) 23 July 2021 (2021-07-23) entire document | 1-107 |
| A | US 2021307049 A1 (QUALCOMM INC.) 30 September 2021 (2021-09-30) entire document | 1-107 |
| A | WO 2013103545 A1 (QUALCOMM INC.) 11 July 2013 (2013-07-11) entire document | 1-107 |

☑ Further documents are listed in the continuation of Box C. ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 January 2024** | **31 January 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/094024** |

**C.**     **DOCUMENTS CONSIDERED TO BE RELEVANT**

| Category* | Citation of document, with indication, where appropriate, of the relevant passages | Relevant to claim No. |
|---|---|---|
| A | MEDIATEK INC. ""R2-1908071 Support multi-TRP_panel transmission"" *3GPP tsg_ran\wg2_rl2*, 03 May 2019 (2019-05-03),    entire document | 1-107 |
| A | MEDIATEK INC. ""R2-1911129 Support multi-TRP_panel transmission"" *3GPP tsg_ran\wg2_rl2*, 16 August 2019 (2019-08-16),    entire document | 1-107 |

Form PCT/ISA/210 (second sheet) (July 2022)

## INTERNATIONAL SEARCH REPORT
### Information on patent family members

International application No.

**PCT/CN2023/094024**

| Patent document cited in search report | | | Publication date (day/month/year) | Patent family member(s) | | | Publication date (day/month/year) |
|---|---|---|---|---|---|---|---|
| WO | 2022220108 | A1 | 20 October 2022 | None | | | |
| CN | 102892192 | A | 23 January 2013 | None | | | |
| CN | 110475358 | A | 19 November 2019 | JP | 2022174080 | A | 22 November 2022 |
| | | | | BR | 112020022625 | A2 | 02 February 2021 |
| | | | | EP | 3783979 | A1 | 24 February 2021 |
| | | | | EP | 3783979 | A4 | 23 June 2021 |
| | | | | EP | 3783979 | B1 | 18 October 2023 |
| | | | | US | 2023140450 | A1 | 04 May 2023 |
| | | | | US | 11838885 | B2 | 05 December 2023 |
| | | | | CA | 3099321 | A1 | 14 November 2019 |
| | | | | US | 2021058885 | A1 | 25 February 2021 |
| | | | | US | 11516760 | B2 | 29 November 2022 |
| | | | | AU | 2019266797 | A1 | 26 November 2020 |
| | | | | AU | 2019266797 | B2 | 20 January 2022 |
| | | | | AU | 2019266797 | C1 | 05 May 2022 |
| | | | | JP | 2021522748 | A | 30 August 2021 |
| | | | | JP | 7128297 | B2 | 30 August 2022 |
| CN | 113169848 | A | 23 July 2021 | None | | | |
| US | 2021307049 | A1 | 30 September 2021 | US | 11800528 | B2 | 24 October 2023 |
| WO | 2013103545 | A1 | 11 July 2013 | None | | | |

Form PCT/ISA/210 (patent family annex) (July 2022)